# EUROPÄISCHE PATENTSCHRIFT

(11) **EP 4 055 581 B1**
(45) Veröffentlichungstag und Bekanntmachung des Hinweises auf die Patenterteilung: **23.09.2026**
(21) Anmeldenummer: 19821093.2
(22) Anmeldetag: 18.12.2019
(51) Int. Cl.: G09B 21/00

(54) **VORRICHTUNG, SYSTEM UND VERFAHREN ZUR ERZEUGUNG EINER DREIDIMENSIONALEN STRUKTUR IN EINEM MEDIUM**
APPARATUS, SYSTEM AND METHOD FOR PRODUCING A THREE-DIMENSIONAL STRUCTURE IN A MEDIUM
APPAREIL, SYSTÈME ET PROCÉDÉ DE PRODUCTION D'UNE STRUCTURE TRIDIMENSIONNELLE DANS UN SUPPORT

(30) Priorität: 04.11.2019 EP 19206833
(43) Veröffentlichungstag der Anmeldung: 14.09.2022
(73) Patentinhaber: VRVis GmbH, 1220 Vienna (AT)
(72) Erfinder: REICHINGER, Andreas, 1150 Wien (AT)
(74) Vertreter: Linsmeier, Josef
(86) Internationale Anmeldenummer: PCT/EP2019/086083
(87) Internationale Veröffentlichungsnummer: WO 2021/089179

(56) Entgegenhaltungen:
- EP-A1- 1 429 307

## Beschreibung

Die Erfindung betrifft eine Vorrichtung, ein System und ein Verfahren zur Erzeugung einer dreidimensionalen Struktur in einem Medium.

Taktile Flachreliefdarstellungen sind eine wertvolle Hilfe für blinde und sehbehinderte Menschen, um Bilder und Objekte wahrzunehmen, die für sie ansonsten nicht wahrnehmbar sind. Im Vergleich zu den eher flachen Darstellungen von erhabenen Strichzeichnungen und taktilen Diagrammen bietet eine Flachreliefdarstellung mehr Möglichkeiten, Tiefe, 3D-Form und Oberflächentexturen zu vermitteln. Zu den erfolgreichen Anwendungen zählen beispielsweise Reliefs von Gemälden in Museen, die in Materialien dauerhaft eingearbeitet wurden. Mithilfe von sog. 3D-Druckern und CNC-Maschinen können z.B. auch topografische Karten erzeugt werden.

Subtraktive und additive Herstellungsverfahren, wie CNC-Fräsen bzw. 3D-Druck, erfordern jedoch relativ komplexe Produktionsmaschinen, verbrauchen Material, haben eine vergleichsweise lange Produktionszeit und sind daher relativ teurer.

EP 1 429 307 A1 offenbart eine Blindenschriftanzeigevorrichtung, die ein Rotationselement mit mehreren auf- und abwärts bewegbaren Taststiften zur Anzeige von Zeichen aufweist, das durch Rotationsantriebsmittel gedreht wird.

Es ist eine Aufgabe der Erfindung, eine Vorrichtung, ein System und ein Verfahren zur Erzeugung einer dreidimensionalen Struktur in einem Medium anzugeben, welche bzw. welches im Hinblick auf einen oder mehrere der vorstehend genannten Nachteile verbessert ist und insbesondere im Aufbau bzw. in der Durchführung einfach, kostengünstig und schnell ist und ohne Materialverbrauch auskommt.

Diese Aufgabe wird durch eine Vorrichtung, ein System und ein Verfahren gemäß den unabhängigen Ansprüchen gelöst.

Die angehängten Ansprüche offenbaren die Erfindung. Eine Vorrichtung zur Erzeugung einer dreidimensionalen Struktur in einem Medium gemäß einem ersten Aspekt der Erfindung weist auf: eine Aufnahmeeinrichtung, welche dazu eingerichtet ist, ein Medium aufzunehmen, welches eine Vielzahl von in mehreren Zeilen parallel zueinander angeordneten Stiften, welche im Folgenden auch als "Pins" bezeichnet werden, aufweist, welche in Längsrichtung einzeln verschiebbar sind, und mindestens einen Schreibkopf, welcher im Folgenden auch als "Druckkopf" bezeichnet wird, welcher einen oder mehrere in einer Zeile angeordnete, einzeln ansteuerbare Positionierstifte, welche im Folgenden auch als "Beschreibe-Pins" bezeichnet werden, aufweist, die dazu eingerichtet sind, jeweils eine vorgegebene Position bezogen auf die Längsrichtung einzunehmen und auf eine zu beschreibende Zeile des von der Aufnahmeeinrichtung aufgenommenen Mediums zu bewegt zu werden und dabei die in der zu beschreibenden Zeile angeordneten Stifte des Mediums entsprechend der jeweils eingenommenen Position der Positionierstifte in Längsrichtung zu verschieben.

Ein System zur Erzeugung einer dreidimensionalen Struktur in einem Medium gemäß einem zweiten Aspekt der Erfindung weist auf: mindestens ein Medium, welches eine Vielzahl von in mehreren Zeilen des Mediums parallel zueinander angeordneten Stiften aufweist, welche in Längsrichtung einzeln verschiebbar sind, und eine Vorrichtung gemäß dem ersten Aspekt der Erfindung.

Bei einem Verfahren zur Erzeugung einer dreidimensionalen Struktur in einem Medium, welches eine Vielzahl von in mehreren Zeilen parallel zueinander angeordneten und in Längsrichtung einzeln verschiebbaren Stiften aufweist, werden gemäß einem dritten Aspekt der Erfindung ein oder mehrere in einer Zeile angeordnete Positionierstifte in jeweils eine vorgegebene Position bezogen auf die Längsrichtung gebracht und anschließend auf eine zu beschreibende Zeile des Mediums zu bewegt, wobei die in der zu beschreibenden Zeile angeordneten Stifte des Mediums entsprechend der jeweils eingenommenen Position der Positionierstifte in Längsrichtung verschoben werden.

Bevorzugte Aspekte der Erfindung basieren auf dem Ansatz, in ein Medium, das eine Vielzahl von Stiften aufweist, die in mehreren, z.B. in x-Richtung verlaufenden, Zeilen parallel zueinander angeordnet und in Längsrichtung, z.B. in z-Richtung, einzeln verschiebbar sind, eine dreidimensionale Struktur zeilenweise einzuprägen, indem einzeln ansteuerbare Positionierstifte eines Schreibkopfs zunächst in eine durch die einzuprägende dreidimensionale Struktur vorgegebene Position bezogen auf die Längsrichtung gebracht, dort gehalten und dann auf die jeweils zu beschreibende Zeile des Mediums zu bewegt werden, insbesondere in Längsrichtung bzw. z-Richtung, wodurch die in der jeweils zu beschreibenden Zeile befindlichen Stifte des Mediums entsprechend der jeweils eingenommenen Position der Positionierstifte in Längsrichtung verschoben werden. Nachdem die in der Zeile des Mediums befindlichen Stifte entsprechend verschoben worden sind, wird der Schreibkopf relativ zum Medium bzw. das Medium relativ zum Schreibkopf senkrecht zur Richtung der Zeilen, z.B. in y-Richtung, schritt- bzw. zeilenweise bewegt, so dass die Stifte weiterer Zeilen des Mediums entsprechend verschoben werden können.

Das Medium ist vorzugsweise so beschaffen, dass die Stifte des Mediums in der nach der Verschiebung durch die Positionierstifte jeweils eingenommenen Position reibschlüssig gehalten werden. Vorzugsweise ist das Medium so beschaffen, dass die Stifte nach einem Schreibvorgang wieder in eine Ausgangsposition gebracht werden können, so dass das Medium für einen neuen Schreibvorgang zur Verfügung steht, d.h. wiederbeschreibbar ist.

Vorzugsweise haben die Pins bei hexagonaler Anordnung einen kreisförmigen oder hexagonalen Querschnitt mit einem Durchmesser von ca. 1 mm. Bei orthogonaler Anordnung haben die Pins vorzugsweise einen quadratischen oder rechteckigen Querschnitt.

Ein Medium in der Größe A4 in x-y-Ebene hat dann etwa 210 × 297 = 62370 Pins bei orthogonaler Anordnung der Pins (A3: 297 × 420 = 124740 Pins). Bei hexagonaler Anordnung erhöht sich die Anzahl der Pins ungefähr um den Faktor 2/√3 ≈ 1,1547, da die Pins in einer Richtung (durch Verschieben jeder zweiten Zeile um ein halbes Pin) noch dichter gepackt werden können (A4: ca. 210 × 343 = 72030 Pins, A3: ca. 297 × 485 = 144045 Pins).

Durch das zeilenweise Beschreiben des Mediums wird im Schreibkopf pro Spalte (d.h. je y-Position innerhalb einer in x-Richtung verlaufenden Zeile) jeweils nur ein Aktor benötigt, durch welchen der betreffende Positionierstift des Schreibkopfs in die entsprechende Position gebracht wird. Bei einem Medium in der Größe A4 bzw. A3 sind dies 210 bzw. 297 Aktoren. Außerdem ist, nachdem die Positionierstifte einer Zeile in ihre jeweilige Position in Längsrichtung gebracht wurden, nur ein Arbeitsschritt pro Zeile erforderlich, um diese Positionsinformation dann in die betreffende Zeile des Mediums einzuprägen. Bei hexagonaler Anordnung der Pins im Medium und zwei Sekunden pro Arbeitsschritt ergeben sich bei einer Größe A4 des Mediums 343 x 2 s ≈ 11,5 Minuten und bei einer Größe A3 des Mediums 485 x 2 s ≈ 16,2 Minuten für das Beschreiben des kompletten Mediums.

Dem gegenüber wären bei einer so hohen Anzahl von Pins im Medium die Herstellungskosten für eine entsprechende Vorrichtung sehr hoch, wenn dort für jedes Pin ein eigener Aktor vorgesehen wäre. Ein Beschreiben mit nur einem einzelnen Aktor, der die Pins des Mediums nacheinander einzeln in die jeweilige Position bringt, würde wiederum sehr lange dauern. Bei zwei Sekunden pro Pin wären das bei einer Größe A4 des Mediums 72030 x 2 s = ca. 40 Stunden bzw. bei einer Größe A3 des Mediums ca. 80 Stunden.

Insgesamt wird durch die Erfindung die Erzeugung einer dreidimensionalen Struktur in einem Medium verbessert, indem insbesondere ein einfacher und kostengünstiger Aufbau bzw. eine schnelle Durchführung ermöglicht wird. Darüber hinaus wird aufgrund der Wiederbeschreibbarkeit des Mediums beim Beschreiben des Mediums kein Material verbraucht.

Vorzugsweise ist eine Steuerungseinrichtung vorgesehen, welche dazu eingerichtet ist, Strukturdaten zu erzeugen und/oder zu empfangen, durch welche die zu erzeugende dreidimensionale Struktur und/oder die entsprechenden Positionen der zu positionierenden Stifte des Mediums charakterisiert wird bzw. werden und/oder die vorgegebenen Positionen der Positionierstifte vorgegeben werden. Die Steuerungseinrichtung ist vorzugsweise dazu eingerichtet, die in der Zeile des Schreibkopfs angeordneten Positionierstifte in Abhängigkeit von den Strukturdaten so anzusteuern, dass die Positionierstifte bezogen auf die Längsrichtung Positionen einnehmen, welche der zu erzeugenden dreidimensionalen Struktur entlang einer jeweils zu beschreibenden Zeile des Mediums entsprechen. Bei den Strukturdaten kann es sich z.B. um einen dreidimensionalen Datensatz handeln, welcher x-, y- und z-Koordinaten der dreidimensionalen Struktur enthält, wobei die x-Koordinaten Positionen in Richtung der Zeilen des Mediums, die y-Koordinaten Positionen in Richtung der Spalten (senkrecht zu den Zeilen) des Mediums und die z-Koordinaten Positionen in Längsrichtung der Stifte (senkrecht zu den Zeilen und Spalten) angeben. Die im Datensatz enthaltenen Koordinaten müssen dabei nicht zwingend identisch sein mit den x-, y- und z-Koordinaten der in das Medium einzuprägenden Struktur, sondern können auch z.B. in einem kleineren oder größeren Maßstab vorliegen. Im letzteren Fall ist die Steuerungseinrichtung dazu eingerichtet, die im Datensatz enthaltenen Koordinaten in die Koordinaten der in das Medium einzuprägenden Struktur umzurechnen, z.B. durch Skalierung und/oder Interpolation.

Vorzugsweise ist der Schreibkopf dazu eingerichtet, die, insbesondere alle, in der Zeile des Schreibkopfs angeordneten Positionierstifte gleichzeitig und/oder gemeinsam auf die zu beschreibende Zeile des Mediums zuzubewegen, um die in der zu beschreibenden Zeile angeordneten Stifte des Mediums entsprechend der jeweils eingenommenen Position der Positionierstifte in Längsrichtung zu verschieben. Bei dieser Ausführung werden also zuerst die Positionierstifte bewegt und in Position in Längsrichtung gebracht und dort vorzugsweise festgeklemmt, bevor sie schließlich gemeinsam in das Medium eintauchen. Der Schreibvorgang und das damit verbundene Einprägen eines "Höhenprofils" in eine Zeile des Mediums kann dadurch auf nur einen Arbeitsgang reduziert werden.

Alternativ ist es grundsätzlich aber auch möglich, dass den Positionierstiften zugeordnete Halteelemente und/oder Positionierelemente direkt die einzelnen Positionierstifte bewegen und diese dabei die Stifte im Medium verschieben.

Vorzugsweise weist der Schreibkopf ein Positionierelement auf, welches im Folgenden auch als "positionierendes Element" bezeichnet wird und dazu eingerichtet ist, die, insbesondere alle, in der Zeile des Schreibkopfs angeordneten Positionierstifte gleichzeitig und/oder gemeinsam in Längsrichtung zu bewegen, und den Positionierstiften jeweils ein Halteelement zugeordnet ist, welches im Folgenden auch als "binäres Element" bezeichnet wird und dazu eingerichtet ist, eine durch das Positionierelement erzeugte Bewegung des jeweiligen Positionierstifts in Längsrichtung solange zu ermöglichen, bis der Positionierstift die vorgegebene Position bezogen auf die Längsrichtung eingenommen hat, und den Positionierstift in der vorgegebenen Position zu halten, wenn der Positionierstift die vorgegebene Position bezogen auf die Längsrichtung eingenommen hat. Vorzugsweise ist die Steuerungseinrichtung dazu eingerichtet, das Positionierelement und die Halteelemente in Abhängigkeit von den Strukturdaten so anzusteuern, dass die Positionierstifte durch das Positionierelement in Längsrichtung bis zu den durch die Strukturdaten jeweils vorgegebenen Positionen bewegt werden und dort von den jeweils zugeordneten Halteelementen gehalten werden. Da hierbei die Positionierstifte durch lediglich ein Positionierelement gemeinsam verschoben werden können und die jeweiligen Halteelemente lediglich zwei Aktionen ausführen können müssen, nämlich die Bewegung des jeweiligen Positionierstifts zu ermöglichen bzw. zu unterbinden, lässt sich auf besonders einfache und zuverlässige Weise ein präzises Verschieben der Positionierstifte in die jeweils vorgegebene Position in Längsrichtung realisieren.

Alternativ ist aber auch denkbar, direkte Aktoren zu verwenden, die die Positionierstifte in die jeweilige Position in Längsrichtung bewegen. Bei dieser Ausführung ist die Steuerungseinrichtung vorzugsweise dazu eingerichtet, die Aktoren in Abhängigkeit von den Strukturdaten so anzusteuern, dass die Positionierstifte durch die Aktoren in Längsrichtung bis zu den durch die Strukturdaten jeweils vorgegebenen Positionen bewegt und dort gehalten werden.

Ferner kann vorzugsweise vorgesehen sein, die Positionierstifte nach dem Positionieren und/oder während sie in das Medium eintauchen zusätzlich mittels einer weiteren bzw. stärkeren Fixiereinheit zu fixieren, als es durch die Halteelemente gegeben ist. Hierfür kann z.B. eine weitere Klemmeinrichtung über alle Positionierstifte vorgesehen sein.

Es ist ein Gegenkopf vorgesehen, welcher dem Schreibkopf gegenüberliegt, d.h. der Schreibkopf befindet sich auf einer ersten Seite des Mediums und der Gegenkopf befindet sich auf einer der ersten Seite des Mediums gegenüberliegenden zweiten Seite des Mediums. Der Gegenkopf weist in einer Zeile angeordnete erste Gegenstifte auf, welche im Folgenden auch als "Gegen-Pins" bezeichnet werden und bezüglich ihrer Anzahl und/oder Anordnung den Positionierstiften des Schreibkopfs im Wesentlichen entsprechen und dazu eingerichtet sind, bezogen auf die eingenommenen Positionen der Positionierstifte jeweils komplementäre Positionen einzunehmen und an einer beschriebenen Zeile des Mediums positioniert zu werden, nachdem die in der beschriebenen Zeile des Mediums angeordneten Stifte entsprechend der jeweils eingenommenen Position der Positionierstifte in Längsrichtung vorschoben worden sind und/oder während die in einer der beschriebenen Zeile benachbarten und zu beschreibenden Zeile des Mediums angeordneten Stifte entsprechend der jeweils eingenommenen Position der Positionierstifte in Längsrichtung vorschoben werden. Dadurch wird auf zuverlässige Weise verhindert, dass die Positionen der Stifte des Mediums in einer bereits, insbesondere unmittelbar zuvor, beschriebenen Zeile beim Beschreiben einer benachbarten Zeile aufgrund von Reibungskräften in unerwünschter Weise verändert werden.

Vorzugsweise werden die zu den Positionen der Stifte des Mediums komplementären Positionen der Gegenstifte am Medium direkt "abgegriffen", indem die vorzugsweise federnd gelagerten Gegenstifte an das Medium gefahren werden, solange auf der gegenüberliegenden Seite noch die Positionierstifte anliegen, und danach mit einem gemeinsamen Fixierelement fixiert werden. Dadurch brauchen die Gegenstifte nicht einzeln angesteuert zu werden, so dass viele aktive Elemente bzw. Aktoren eingespart werden können.

Alternativ können aber auch einzeln ansteuerbare Gegenstifte bzw. direkte Aktoren verwendet werden. Vorzugsweise ist die Steuerungseinrichtung dazu eingerichtet, die in der Zeile des Gegenkopfs angeordneten ersten Gegenstifte in Abhängigkeit von den Strukturdaten so anzusteuern, dass die ersten Gegenstifte Positionen einnehmen, welche zu den eingenommenen Positionen der Positionierstifte und/oder zu der zu erzeugenden dreidimensionalen Struktur entlang einer jeweils zu beschreibenden Zeile des Mediums komplementär sind.

Vorzugsweise weist der Gegenkopf ferner in einer weiteren Zeile angeordnete zweite Gegenstifte auf, welche im Folgenden auch als "federnd gelagerte Gegen-Pins" bezeichnet werden und den Positionierstiften des Schreibkopfs im Wesentlichen gegenüberliegen und dazu eingerichtet sind, an einer zu beschreibenden Zeile des Mediums positioniert zu werden und die in der zu beschreibenden Zeile des Mediums angeordneten Stifte jeweils mit einer Gegenkraft in Längsrichtung zu beaufschlagen, während die Stifte entsprechend der jeweils eingenommenen Position der Positionierstifte in Längsrichtung verschoben werden. Dadurch wird sichergestellt, dass sich die Stifte der aktuell zu beschreibenden Zeile des Mediums nicht gegenseitig aufgrund von Reibungskräften beeinflussen. Durch die Gegenkraft wird erreicht, dass jeder Stift am entsprechenden Positionierstift anliegt. Dadurch kann verhindert werden, dass ein Stift, der weiter bzw. höher als die benachbarten Stifte der Zeile verschoben wird, die jeweils benachbarten Stifte aufgrund von Reibung mitnimmt, so dass diese weiter als gewünscht verschoben würden.

Vorzugsweise weist der Gegenkopf ferner ein oder mehrere in einer oder mehreren weiteren Zeilen angeordnete Ausrichtelemente, insbesondere in Form von Ausrichtstiften, welche im Folgenden auch als "Vorbereitungs-Pins" bezeichnet werden und/oder in Form einer Leiste, auf. Die Ausrichtelemente sind dazu eingerichtet, die in einer zu beschreibenden Zeile des Mediums angeordneten Stifte in eine bezogen auf die Längsrichtung vorgegebene Ausgangsposition zu bringen, wenn die Ausrichtelemente auf das Medium zu bewegt werden, und/oder die in einer zu beschreibenden Zeile des Mediums angeordneten Stifte in der Ausgangsposition zu halten, wenn die vorhergehende und/oder nächste und/oder eine benachbarte Zeile beschrieben wird. Vorzugsweise sind die Ausrichtelemente in zwei oder mehreren Zeilen, insbesondere in drei Zeilen, angeordnet und so ausgestaltet, dass sie die in zwei oder mehreren Zeilen des Mediums angeordneten Stifte unterschiedlich weit in Längsrichtung verschieben, wenn die Ausrichtelemente auf das Medium zu bewegt werden. Bei diesen Ausführungen bereitet der Gegenkopf die nächsten, noch nicht beschriebenen Zeilen für das Beschreiben vor, indem er die jeweiligen Stifte in den Zeilen des Mediums in eine definierte, insbesondere eine minimale, Position verschiebt. Dies verhindert zugleich, dass die Beschreibe-Pins die nachfolgenden Zeilen verändern. Das Vorbereiten erfolgt vorzugsweise mit (mehreren) Zeilen von Vorbereitungs-Pins, vorzugsweise stufenweise, um ungünstige bzw. "pathologische" Zustände des Mediums zu vermeiden, bei welchen z.B. die Pins der noch unbeschriebenen Zeilen des Mediums durch Reibung über den erlaubten Bereich hinaus geschoben werden. Sollten Pins zu weit über den erlaubten Bereich kommen, könnten sie aus dem Medium fallen, und die Stabilität des gesamten Mediums gefährden. Letzteres kann vorteilhafterweise bereits mit drei Stufen, d.h. in drei Zeilen angeordneten Ausrichtelementen, zuverlässig vermieden werden.

Der vorstehend beschriebene Gegenkopf hat im Wesentlichen eine das - durch den Schreibkopf bewirkte - eigentliche Beschreiben des Mediums begleitende oder unterstützende Funktion, indem durch erste Gegenstifte die Pins der unmittelbar zuvor beschriebenen Zeile in ihrer Position gehalten werden und/oder durch zweite Gegenstifte sichergestellt wird, dass die Pins der aktuell beschriebenen Zeile sich nicht gegenseitig beeinflussen und/oder durch Ausrichtelemente die Stifte noch zu beschreibender Zeilen vorbereitet werden. Wegen der unterschiedlichen Funktionen des Schreibkopfs und Gegenkopfs wird dieser Ansatz im Folgenden auch als "asymmetrisches Konzept" bezeichnet.

Vorzugsweise kann aber auch vorgesehen sein, dass der Gegenkopf zusätzlich oder alternativ zu einer oder mehreren das Beschreiben des Mediums unterstützenden bzw. begleitenden Funktionen auch zum Beschreiben des Mediums ausgestaltet ist, d.h. eine oder mehrere Funktionen des Schreibkopfs ausführen kann. Entsprechend kann der Schreibkopf dazu eingerichtet sein, eine oder mehrere der vorstehend beschriebenen Funktionen des Gegenkopfs auszuführen. Wegen der zumindest teilweise gleichen Funktionen des Schreibkopfs und Gegenkopfs wird dieser Ansatz im Folgenden auch als "symmetrisches Konzept" bezeichnet.

Vorzugsweise sind im symmetrischen Konzept erste und/oder zweite Gegenstifte und/oder Positionierstifte und/oder Ausrichtstifte auf beiden Köpfen (Schreibkopf und Druckkopf) gleichermaßen vorhanden. Der Gegenkopf dann daher auch als "zweiter Schreibkopf" oder "zweiter Druckkopf" bezeichnet werden. Der Zeilenvorschub, z.B. in y-Richtung, umfasst hierbei vorzugsweise jeweils zwei Zeilen.

Vorteilhafterweise können die Positionierstifte des einen Kopfs (z.B. des Schreibkopfs) im Gegenspiel als erste Gegenstifte des anderen Kopfs (z.B. des Gegenkopfs) dienen. Das Profil der zuletzt in das Medium eingeprägten Zeile muss hierbei nicht erst vom Gegenkopf abgegriffen werden, sondern bleibt einfach vom letzten Beschreiben der Zeile stehen.

Während das asymmetrische Konzept u.U. kostengünstiger als das symmetrische Konzept realisiert werden kann, ermöglich das symmetrische Konzept ein noch schnelleres Beschreiben des Mediums mit etwa der doppelten Geschwindigkeit.

Vorzugsweise sind im symmetrischen Konzept die ersten Gegenstifte des Gegenkopfs ferner dazu eingerichtet, jeweils eine vorgegebene Position bezogen auf die Längsrichtung einzunehmen und auf eine zu beschreibende Zeile des von der Aufnahmeeinrichtung aufgenommenen Mediums zu bewegt zu werden und dabei die in der zu beschreibenden Zeile angeordneten Stifte des Mediums entsprechend der jeweils eingenommenen Position der ersten Gegenstifte in Längsrichtung zu verschieben. Die "Gegen-Pins" des Gegenkopfs dienen hierbei also auch als "Beschreibe-Pins", d.h. als Positionierstifte. Die vorstehenden Ausführungen im Zusammenhang mit den Positionierstiften des Schreibkopfs gelten entsprechend.

Vorzugsweise ist vorgesehen, dass die Positionierstifte des Schreibkopfs bezüglich ihrer Anzahl und/oder Anordnung den ersten Gegenstiften des Gegenkopfs im Wesentlichen entsprechen und dazu eingerichtet sind, an einer beschriebenen Zeile des Mediums zu verbleiben, nachdem die in der beschriebenen Zeile des Mediums angeordneten Stifte entsprechend der jeweils eingenommenen Position der Positionierstifte des Schreibkopfs in Längsrichtung vorschoben worden sind und während die in einer der beschriebenen Zeile benachbarten und zu beschreibenden Zeile des Mediums angeordneten Stifte entsprechend der jeweils eingenommenen Position der ersten Gegenstifte des Gegenkopfs in Längsrichtung vorschoben werden. Die "Beschreibe-Pins" des Schreibkopfs dienen hierbei also auch als "Gegen-Pins" beim Beschreiben des Mediums durch die ersten Gegenstifte des Gegenkopfs. Die vorstehenden Ausführungen im Zusammenhang mit den ersten Gegenstiften des Gegenkopfs gelten entsprechend. Vorteilhafterweise muss das Profil der zuletzt in das Medium eingeprägten Zeile (beschriebene Zeile) hierbei nicht - wie beim asymmetrischen Konzept - erst abgegriffen werden, um entsprechende komplementäre Positionen der Gegen-Pins zu erhalten, sondern der Schreibkopf bleibt nach dem Einprägen der Zeile einfach so lange bei der beschriebenen Zeile stehen, während die ersten Gegenstifte des Gegenkopfs eine benachbarte Zeile (zu beschreibende Zeile) beschreiben.

Vorzugsweise steuert die Steuerungseinrichtung die Vorschubeinrichtung so an, dass der Schreibkopf nach dem Beschreiben einer Zeile so lange an der beschriebenen Zeile verbleibt, bis der Schreibvorgang an der benachbarten Zeile durch die ersten Gegenstifte des Gegenkopfs auf der gegenüberliegenden Seite des Mediums abgeschlossen ist.

Vorzugsweise weist der Schreibkopf ferner in einer weiteren Zeile angeordnete Gegenstifte, insbesondere in Form von federnd gelagerten Gegen-Pins, auf, welche den ersten Gegenstiften des Gegenkopfs im Wesentlichen gegenüberliegen und dazu eingerichtet sind, an einer zu beschreibenden Zeile des Mediums positioniert zu werden und die in der zu beschreibenden Zeile des Mediums angeordneten Stifte jeweils mit einer Gegenkraft in Längsrichtung zu beaufschlagen, während die Stifte entsprechend der jeweils eingenommenen Position der ersten Gegenstifte des Gegenkopfs in Längsrichtung verschoben werden. Die am Schreibkopf vorgesehenen Gegenstifte haben hierbei die Funktion wie die zweiten Gegenstifte bzw. "federnd gelagerten Gegen-Pins" am Gegenkopf. Die vorstehenden Ausführungen im Zusammenhang mit den zweiten Gegenstiften am Gegenkopf gelten entsprechend.

Vorzugsweise weist der Schreibkopf ferner ein oder mehrere in einer oder mehreren weiteren Zeilen angeordnete Ausrichtelemente, insbesondere in Form von Ausrichtstiften und/oder in Form einer Leiste, auf, welche dazu eingerichtet sind, die in einer mittels der ersten Gegenstifte des Gegenkopfs zu beschreibenden Zeile des Mediums angeordneten Stifte in eine bezogen auf die Längsrichtung vorgegebene Ausgangsposition zu bringen, wenn die Ausrichtelemente des Schreibkopfs auf das Medium zu bewegt werden, und/oder in der Ausgangsposition zu halten, wenn die nächste und/oder eine benachbarte Zeile mittels der ersten Gegenstifte des Gegenkopfs beschrieben wird. Die am Schreibkopf vorgesehenen Ausrichtelemente haben hierbei die Funktion wie die Ausrichtelemente am Gegenkopf. Vorzugsweise sind die am Schreibkopf vorgesehenen Ausrichtelemente gegengleich, d.h. in gleicher, aber spiegelbildlicher Weise, zu den Ausrichtelementen am Gegenkopf angeordnet und insbesondere um je zwei Zeilen versetzt. Die vorstehenden Ausführungen im Zusammenhang mit den Ausrichtelementen am Gegenkopf gelten entsprechend mit dem Unterschied, dass die Ausrichtelemente am Schreibkopf und Gegenkopf nur in jeder zweiten Zeile abwechselnd angeordnet sind.

Vorzugsweise können die Ausrichtelemente im Gegenkopf und/oder Schreibkopf versenkbar ausgeführt sein. Dies ist insbesondere dann von Vorteil, wenn der Gegenkopf bzw. Schreibkopf bzw. die daran befindlichen Ausrichtelemente am Anfang und/oder am Ende eines Druckauftrags gegen den Rahmen des Mediums stößt bzw. stoßen. Fixe Ausrichtelemente könnten in diesem Fall u.U. verhindern, dass sich der Gegen- bzw. Schreibkopf gegen das Medium bewegen kann.

Vorzugsweise ist ferner eine Vorschubeinrichtung vorgesehen, welche dazu eingerichtet ist, eine Relativbewegung zwischen dem Schreibkopf und/oder Gegenkopf einerseits und dem Medium andererseits in einer im Wesentlichen senkrecht zur Ausrichtung der Zeilen des Mediums und/oder senkrecht zur Längsrichtung verlaufenden Vorschubrichtung zu erzeugen, um ein zeilenweises Erzeugen der dreidimensionalen Struktur in dem Medium zu ermöglichen.

Vorzugsweise ist die Steuerungseinrichtung dazu eingerichtet, die Vorschubeinrichtung so anzusteuern, dass der Schreibkopf und/oder Gegenkopf, insbesondere die jeweils in einer Zeile angeordneten Positionierstifte, die ersten und/oder zweiten Gegenstifte und/oder die Ausrichtelemente, in Vorschubrichtung schrittweise von einer Zeile des Mediums zur nächsten Zeile des Mediums oder - im Falle des symmetrischen Konzepts - übernächsten Zeile des Mediums bewegt wird bzw. werden, um ein zeilenweises Erzeugen der dreidimensionalen Struktur in dem Medium in Abhängigkeit von den jeweiligen Strukturdaten, welche die zu erzeugende dreidimensionale Struktur in der jeweiligen Zeile charakterisieren, zu ermöglichen.

Die Vorschubbewegung der Köpfe (d.h. des Schreib- und Gegenkopfs) erfolgt relativ zum Medium. Dabei müssen nicht zwingend beide Köpfe bewegt werden. Es ist daher denkbar, dass zumindest ein Kopf (Schreibkopf und/oder Druckkopf) ortsfest ist und das Medium selbst bewegt wird und der jeweils andere Kopf nur eine kleine Bewegung um jeweils eine Zeile durchführt.

Ferner kann zusätzlich zur vorstehend beschriebenen Relativbewegung in Vorschubrichtung, z.B. in y-Richtung, in manchen Fällen auch eine geringfügige Relativbewegung in Richtung der Zeilen, z.B. in x-Richtung, vorgesehen sein. So ist z.B. bei hexagonaler Anordnung der Stifte im Medium und asymmetrischem Konzept bei jedem Vorschub um eine Zeilenhöhe, welche im Wesentlichen dem Stiftdurchmesser entspricht, in y-Richtung jeweils ein zusätzlicher relativer Versatz von insgesamt einem halben Stiftdurchmesser (d.h. abwechselnd plus oder minus 1/4 Stiftdurchmesser) in x-Richtung vorgesehen. Um genauer zu sein, ergibt sich bei hexagonaler Anordnung die Zeilenhöhe aus dem Durchmesser mal √3/2 (ca. 0,866 mal Durchmesser).

Vorzugsweise ist die Aufnahmeeinrichtung zur lösbaren Aufnahme des Mediums ausgebildet ist, um einen Austausch des Mediums zu ermöglichen. Dadurch ist es möglich, mit der Vorrichtung nicht nur ein, sondern beliebig viele Medien zu beschreiben. Durch die Trennung von Medium (mit Pins in einem Rahmen) und Drucker (Aktoren und zusätzliche Mechanik, um die Pins des Mediums automatisch in die gewünschte Lage zu bringen), können beliebig viele (preisgünstig herstellbare) Medien mit einem (wegen relativ hoher Kosten für die Aktoren teureren) Drucker beschrieben und ggf. auch wieder gelöscht und wiederbeschrieben werden.

Vorzugsweise ist in den Zeilen des Mediums jeweils eine erste Anzahl von Stiften und in der Zeile des Schreibkopfs eine zweite Anzahl von Positionierstiften angeordnet, welche mit der ersten Anzahl von Stiften im Wesentlichen identisch ist. Dadurch kann jeder Stift in der Zeile des Mediums durch einen entsprechenden Positionierstift am Schreibkopf schnell und einfach gezielt positioniert werden.

Die vorstehend beschriebene Ausführung schließt z.B. auch den Fall einer hexagonalen Stiftanordnung im Medium ein, bei welcher jede zweite Zeile des Mediums einen Stift mehr oder weniger aufweist und die Anzahl von Positionierstiften der maximalen Anzahl von Stiften in den Zeilen (d.h. in den Zeilen mit einem Stift mehr) des Mediums entspricht.

Grundsätzlich ist es aber auch möglich, dass die zweite Anzahl von Positionierstiften größer ist als die erste Anzahl von Stiften je Zeile eines Mediums. Mit der Vorrichtung können dadurch auch Medien beschrieben werden, die schmaler sind als die Breite des Schreibkopfs in Zeilenrichtung oder eine nicht-rechteckige Form aufweisen (z.B. rund, hexagonal).

Es ist auch möglich, dass nicht die gesamte Zeile auf einmal beschrieben wird, sondern nur eine vorgegebene Anzahl von Spalten, und das gesamte Medium mit mehreren Durchgängen fertig beschrieben wird. Hierbei ist vorzugsweise ein zusätzlicher Gegenstift vorgesehen, der seitlich die letzte Spalte beim Eintauchen schützt.

Es ist ferner möglich, dass Medien mit einer niedrigeren Auflösung (d.h. dickeren Stiften) mit einem Drucker mit einer höheren Auflösung (d.h. dünneren Positionierstiften) beschrieben werden. Vorzugsweise ist dabei die Auflösung des Mediums um ein ganzzahliges Vielfaches kleiner als die Auflösung des Schreibkopfs. Alternativ geht es auch anders herum, d.h. dass ein Medium mit höherer Auflösung von einem Drucker mit einer niedrigeren Auflösung beschrieben wird; die beim Beschreiben des Mediums maximal erzielbare Auflösung entspricht dann natürlich nur der (niedrigeren) Auflösung des Druckers.

Vorzugsweise ist die Länge der Stifte im Medium so gewählt, dass diese bei Erreichen einer vorgegebenen maximalen Verschiebung bzw. Position in Längsrichtung noch so stark durch Reibungskräfte gehalten werden, so dass ein Herausfallen der Stifte aus dem Medium verhindert wird. Vorzugsweise kann vorgesehen sein, dass die Länge der Stifte im Medium etwa doppelt so groß ist wie die maximal zulässige Verschiebung in Längsrichtung. Sollen die Pins z.B. um bis zu 40 mm in Längsrichtung verschoben werden können, haben diese vorzugsweise eine Länge von mindestens 80 mm, so dass stets ein genügend großer Teil der Stifte reibschlüssig gehalten werden kann bzw. im Medium eingeklemmt bleibt. Alternativ oder zusätzlich ist die Länge der Stifte im Medium, je nach Größe des Mediums, um eine vorgegebene Distanz größer als die maximal zulässige Verschiebung in Längsrichtung. Sollen die Pins z.B. um bis zu 40 mm in Längsrichtung verschoben werden können und beträgt die vorgegebene Distanz z.B. 30 mm, haben die Stifte vorzugsweise eine Länge von mindestens 70 mm.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: ein Beispiel eines Mediums in einer perspektivischen Ansicht (a) sowie in einem horizontalen Schnitt (b);
- Fig. 2: eine perspektivische Ansicht eines Beispiels einer Vorrichtung bzw. eines Druckers;
- Fig. 3: eine schematische Schnittdarstellung eines Beispiels einer Vorrichtung bzw. eines Druckers nach dem asymmetrischen Konzept;
- Fig. 4: eine schematische Schnittdarstellung eines Beispiels einer Vorrichtung bzw. eines Druckers nach dem symmetrischen Konzept;
- Fig. 5: ein Beispiel einer Ausgestaltung des binären Elements;
- Fig. 6: ein Beispiel einer weiteren Ausgestaltung des binären Elements;
- Fig. 7: eine Schnittdarstellung eines Beispiels eines Gegenkopfs nach dem asymmetrischen Konzept in einer Ausführung mit Blattfedern;
- Fig. 8: zwei Beispiele für symmetrische Druckköpfe mit federnd gelagerten Gegen-Pins;
- Fig. 9: ein Beispiel eines Blockdiagramms zur Veranschaulichung einer Anwendung der Vorrichtung bzw. des Druckers beim Beschreiben eines Mediums bzw. eines entsprechenden Verfahrens; und
- Fig. 10: eine schematische Schnittdarstellung eines weiteren Beispiels einer Vorrichtung bzw. eines Druckers nach dem asymmetrischen Konzept zur Veranschaulichung eines vollständigen Zyklus zum Prägen von zwei Zeilen.

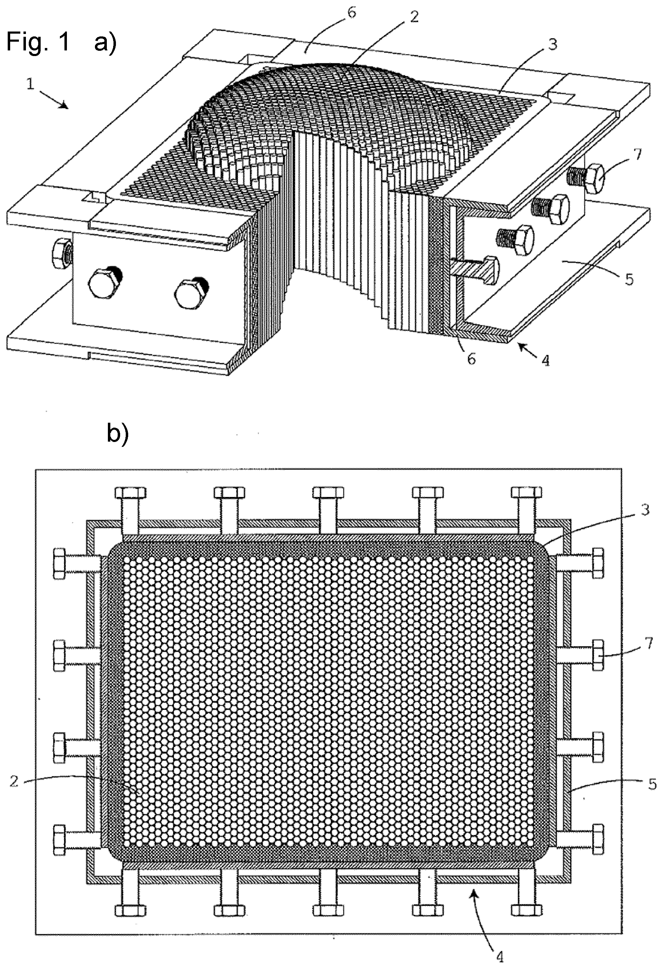

Figur 1 zeigt ein Beispiel eines Mediums 1 in einer perspektivischen Ansicht (Fig. 1a), in der das Medium 1 teilweise aufgeschnitten dargestellt ist, und in einem horizontalen Schnitt (Fig. 1b).

Das Medium 1 weist eine Vielzahl von Stiften 2 auf, die in einem, vorzugsweise rechteckigen, Rahmen 3 zueinander parallel angeordnet und in ihrer Längsrichtung (die in der gewählten Darstellung der Höhe entspricht) individuell verschiebbar bzw. verstellbar sind.

Der Rahmen 3, der vorzugsweise aus einem Elastomer, wie z.B. Silikonkautschuk, bestehen kann, ist innerhalb einer Spanneinrichtung 4 angeordnet, die einen den gesamten Rahmen 3 umfassenden steifen, äußeren Spannteil 5 aufweist, der zur Druckausübung auf vier innere, im Querschnitt vorzugsweise C-bzw. U-förmige, Spannprofile 6 dient.

Wie weiter unten noch ausführlich erläutert wird, kann durch Verschieben einzelner Stifte 2 in Längsrichtung eine beliebige dreidimensionale Struktur - im dargestellten Beispiel eine konvexe Wölbung - im Medium 1 erzeugt werden, was im Zusammenhang mit der vorliegenden Offenbarung auch als Beschreiben des Mediums 1 oder als Drucken oder Druckvorgang bezeichnet wird.

Vorzugsweise wird nach dem Erzeugen der dreidimensionalen Struktur der Rahmen 3 einwärts komprimiert, damit die Stifte 2 in ihrer jeweils eingenommenen Position aufgrund von Reibungskräften gehalten werden.

Dazu wird der Rahmen 3 vorzugsweise mittels der Spanneinrichtung 4 unter Druck gesetzt, z.B. mittels Schrauben 7, die an gegenüberliegenden Seiten des Rahmens 3 in vorzugsweise jeweils gleicher Anzahl vorgesehen sind. Dadurch werden die Stifte 2 in der jeweils eingenommenen Position fixiert.

Weitere alternative bzw. zusätzliche Merkmale des Mediums 1 sind nachfolgend angegeben.

Vorzugsweise ist als innerste Schicht des Rahmens 3, d.h. direkt bei den Stiften 2, ein elastischer Gummi vorgesehen, um kleine Toleranzen auszugleichen.

Vorzugsweise weist der Gummi Rillen auf, damit die Stifte 2 direkt das hexagonale Gitter, d.h. eine hexagonale Anordnung, einnehmen. Damit ist ein konstanter Druck und eine gute Randbedingung gegeben, so dass sich die hexagonale Anordnung der Stifte 2 von alleine einstellen kann. In Falle ebener Wände wird die Zick-Zack-Anordnung des hexagonalen Gitters dagegen manuell hergestellt.

Wie vorstehend bereits beschrieben wurde, kann der Rahmen 3 unter Druck gesetzt werden, indem z.B. eine Seite des Rahmens 3 schiebbar gestaltet und durch Schrauben 7, mit Schnallen oder ähnlichen Einrichtungen eine Druckkraft auf diese Seite erzeugt wird.

Bei einer hexagonalen Anordnung der Stifte 2 ist es bevorzugt, die geraden Gitterkanten (in Figur 1b sind dies die linke und rechte Kante) und nicht die zick-zack-förmigen Gitterkanten (in Figur 1b sind dies die obere und untere Kante) parallel zur kürzeren Rahmenseite zu legen und diese als Zeile zum Beschreiben zu wählen, da so die wenigsten Aktoren nötig sind.

Um eine besonders gleichmäßige Druckverteilung auf den gesamten Rahmen 3 zu erreichen, können vorzugsweise aufblasbare Gummidichtungen, die in einem starren Rahmen 3 angeordnet sind, verwendet werden. Solche Dichtungen können vorzugsweise auch direkt die Rillen aufweisen. Der Hohlraum kann mit Gas (pneumatisch) oder auch Flüssigkeiten (hydraulisch) gefüllt sein. Der Druck kann entweder durch Einpressen von Gas bzw. Flüssigkeiten aufgebaut werden oder durch externen Druck auf die geschlossene Dichtung (z.B. Klemme auf eine Ausbuchtung der Dichtung).

Im Folgenden werden Beispiele für Vorrichtungen, welche auch als "Drucker" bezeichnet werden, zur Erzeugung einer dreidimensionalen Struktur in einem solchen Medium 1 näher beschrieben.

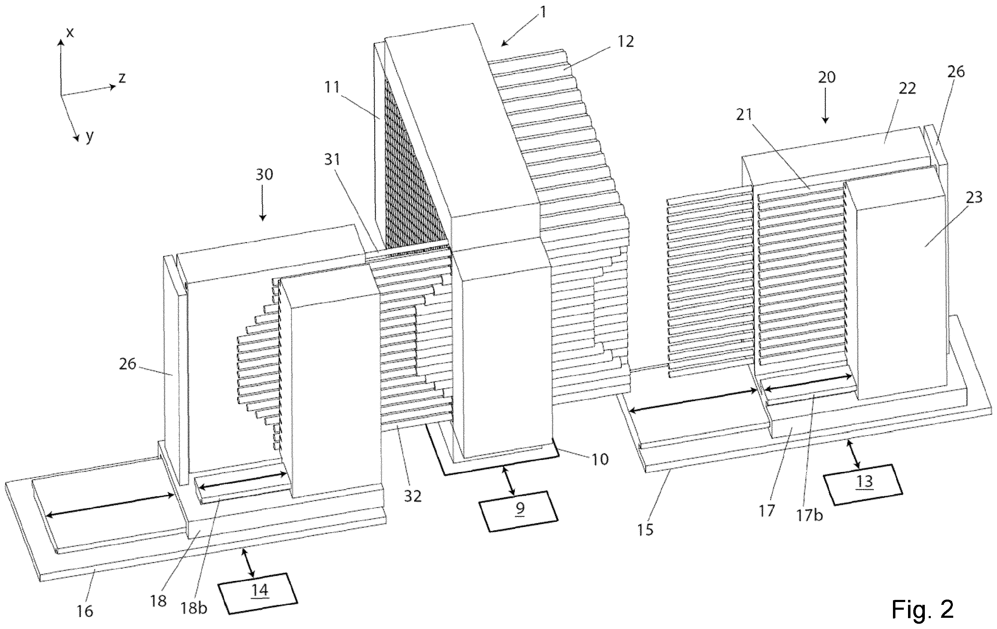

Figur 2 zeigt eine perspektivische Ansicht eines Beispiels einer Vorrichtung bzw. eines Druckers, welche bzw. welcher eine aus Anschaulichkeitsgründen nur schematisch angedeutete Aufnahmeeinrichtung 10 aufweist, in welcher das Medium 1 in einer im Wesentlichen vertikalen Orientierung (x-Richtung) aufgenommen und/oder gehalten wird. Die Aufnahmeeinrichtung 10 kann z.B. vertikale Schienen aufweisen, welche das Medium 1 in der vertikalen Orientierung formschlüssig halten. Insbesondere können hierbei am Rahmen 11 des Mediums 1 entsprechende Nuten vorgesehen sein, in welche die Schienen beim Einsetzen des Mediums 1 in den Drucker einfahren. Alternativ oder zusätzlich kann z.B. in einer bodenseitigen Platte des Druckers eine Vertiefung vorgesehen sein, in welche das Medium 1 eingeführt bzw. eingesteckt und formschlüssig gehalten wird.

Bei dem hier dargestellten symmetrischen Konzept weist die Vorrichtung zwei versetzte Druckköpfe 20, 30 auf, welche sich an den gegenüberliegenden Hauptseiten des Mediums 1 befinden und die einzelnen Pins 12 des Mediums 1 Zeile für Zeile in Längsrichtung (z-Richtung) der Pins 12 verschieben bzw. positionieren können. Die Zeilen des Mediums 1 verlaufen im dargestellten Beispiel vertikal (x-Richtung).

Im dargestellten Beispiel ist das Medium 1 vom Drucker, welcher insbesondere Aktoren und eine zusätzlicher Mechanik aufweist, um die Pins 12 des Mediums 1 automatisch in die gewünschte Lage zu bringen, separierbar, d.h. das Medium 1 kann in den Drucker eingelegt bzw. eingesetzt und auch wieder aus dem Drucker entnommen werden. So können mehrere (vergleichsweise günstige) Medien mit einem (vergleichsweise teureren) Drucker beschrieben, ggf. auch wieder gelöscht und wiederbeschrieben werden.

Vorzugsweise wird das Medium 1 zunächst in einen Ausgangszustand versetzt, z.B. indem alle Stifte in eine im Wesentlichen gleiche Position bezogen auf die Längsrichtung (z-Richtung) gebracht werden, und dann senkrecht in den Drucker eingeführt, so dass alle Pins 12 im Wesentlichen waagrecht liegen und sich nicht durch die Gravitation verändern.

Vorzugsweise weist der Drucker neben einem Druckkopf 20 und einem Gegenkopf 30 mindestens eine vorliegend nur schematisch angedeutete Vorschubeinrichtung 9, 13, 14 auf, mittels welcher eine Relativbewegung zwischen dem Schreibkopf 20 und/oder Gegenkopf 30 einerseits und dem Medium 1 andererseits in einer in y-Richtung verlaufenden Vorschubrichtung erzeugt werden kann, um ein zeilenweises Beschreiben des Mediums 1 zu ermöglichen. So wird z.B. der Druckkopf 20 bzw. Gegenkopf 30 relativ zum feststehenden Medium 1 bewegt, indem die jeweilige Grundplatte 15 bzw. 16, auf welcher der Druckkopf 20 bzw. Gegenkopf 30 gelagert ist, durch die Vorschubeinrichtung 13 bzw. 14 in y-Richtung bewegt wird. Alternativ oder zusätzlich kann aber auch das Medium 1 durch die Vorschubeinrichtung 9 relativ zum feststehenden Druckkopf 20 und Gegenkopf 30 bewegt werden, beispielsweise indem die vorliegend nur schematisch angedeutete Aufnahmeeinrichtung 10 in y-Richtung bewegt wird.

Die mindestens eine Vorschubeinrichtung 9, 13, 14 kann z.B. einen Motor, insbesondere Schrittmotor, und eine Antriebsmechanik aufweisen, mittels welcher der Motor mit der Aufnahmeeinrichtung 10 bzw. der entsprechenden Grundplatte 15 bzw. 16 gekoppelt ist.

Vorzugsweise ist auf den Grundplatten 15, 16 jeweils ein beweglicher Schlitten 17 bzw. 18 vorgesehen, an welchem der Druckkopf 20 bzw. Gegenkopf 30 gelagert ist und welcher jeweils in z-Richtung (siehe lange Doppelpfeile in z-Richtung) verschiebbar ist, so dass der Druckkopf 20 bzw. Gegenkopf 30 beim Einprägen des jeweiligen Höhenprofils in eine Zeile des Mediums 1 bzw. zum Positionieren der Gegenpins 31, 32 in z-Richtung auf das Medium 1 zu und/oder vom Medium 1 weg bewegt werden kann.

Vorzugsweise ist auf den Schlitten 17, 18 jeweils eine Führung 17b bzw. 18b vorgesehen, an welcher das positionierende Element 23 bzw. der bewegliche Teil mit Elektromagneten 23 geführt und in z-Richtung (siehe kurze Doppelpfeile in z-Richtung) hin und her bewegt werden kann, um die Positionierstifte 21 zu setzen.

Die vorstehend beschriebenen Bewegungen der Schlitten 17, 18 in z-Richtung und/oder des positionierenden Elements 23 in z-Richtung werden, analog zu den Vorschubeinrichtungen 9, 13, 14, mit entsprechenden Antriebseinrichtungen, welche z.B. einen Motor und eine geeignete Antriebsmechanik aufweisen, angetrieben. Aus Anschaulichkeitsgründen sind die Antriebseinrichtungen nicht dargestellt.

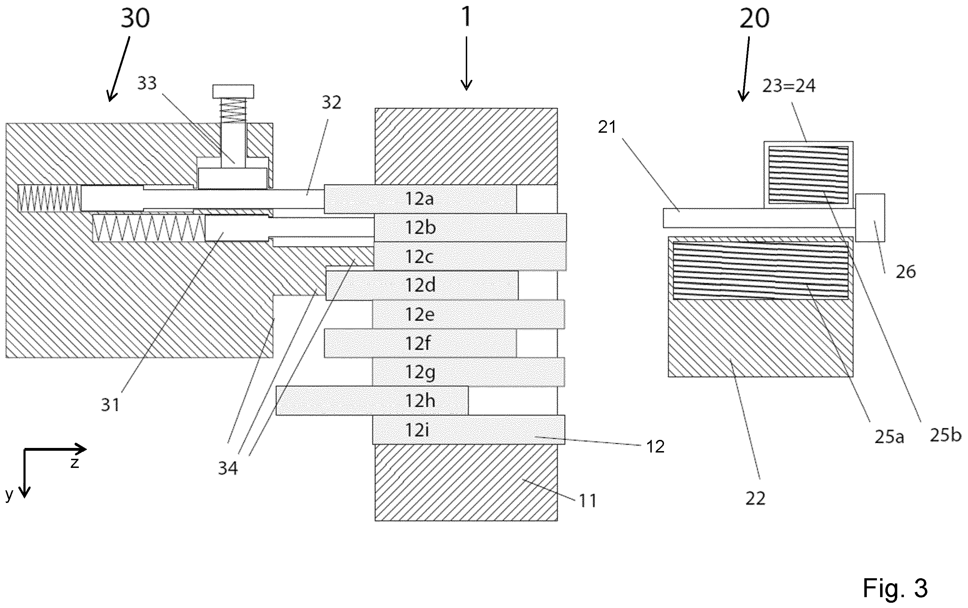

Im Falle des asymmetrischen Konzepts (in Figur 2 nicht dargestellt; siehe Figur 3 und die nachfolgende Beschreibung) ist vorzugsweise zwischen den Schlitten 17, 18 und den Führungen 17b, 18b jeweils eine Zwischenplatte vorgesehen, welche in Zeilenrichtung, d.h. in x-Richtung, um je einen halben Pin-Durchmesser auf und ab bewegt werden kann, um im Falle einer hexagonalen Anordnung der Stifte 12 im Medium 1 den zusätzlichen relativen Versatz von insgesamt einem halben Stiftdurchmesser in x-Richtung zwischen zwei benachbarten Zeilen beim Zeilenwechsel zu berücksichtigen. Wie bei dem vorstehend beschriebenen symmetrischen Konzept ist dabei vorzugsweise auch eine entsprechende Antriebseinrichtung, z.B. ein Motor und eine geeignete Antriebsmechanik, vorgesehen, durch welche die Auf- bzw. Abwärtsbewegung der jeweiligen Zwischenplatte angetrieben wird.

Figur 3 zeigt eine schematische Schnittdarstellung eines Beispiels einer Vorrichtung bzw. eines Druckers nach dem asymmetrischen Konzept mit Druckkopf 20 und Gegenkopf 30 und mit einem binären Element 25 als Elektromagnet. Die Schnittebene des hier dargestellten Schnitts verläuft durch eine Spalte von Pins 12, vorliegend also in der y-z-Ebene, die Zeilen verlaufen in x-Richtung, vorliegend also senkrecht zur Schnitt- bzw. Zeichnungsebene. Jeder bzw. jede der hier dargestellten Pins 21, 31, 32, 34, Federn und Elektromagneten 25 im positionierenden Element 23 des Druckkopfs 20 bzw. am Gegenkopf 30 existiert vielfach (in Zeilenrichtung, d.h. x-Richtung) übereinander, so dass gleichzeitig jeweils eine ganze Zeile beschrieben werden kann.

Der Druckkopf 20 verschiebt jeweils die Pins 12 einer, vorzugsweise gesamten, Zeile im Medium 1 gleichzeitig. Dazu weist der Druckkopf 20 für jeden Pin 12 einer Zeile einen Beschreibe-Pin 21 auf. Diese werden vorzugsweise einzeln angesteuert und jeweils in ihrer Längsrichtung (z-Richtung) so ausgefahren bzw. positioniert, dass die Beschreibe-Pins 21 genau dem gewünschten Tiefenprofil entlang der aktuellen Zeile entsprechen. Dieses Profil wird dann durch Einschieben des Druckkopfs 20 in das Medium 1 in die aktuelle Zeile eingeprägt.

Vorzugsweise sorgt der Gegenkopf 30 dafür, dass sich die Pins 12 während des aktuellen Schreibvorgangs und/oder auch danach nicht durch Reibung gegenseitig beeinflussen.

Dazu hält der Gegenkopf 30 vorzugsweise die jeweils unmittelbar zuvor beschriebene Zeile konstant, indem eine Reihe an Gegen-Pins 32 (mit einem Gegen-Pin 32 je Pin 12 der Zeile) mit genau dem Profil der letzten Zeile anliegt.

Ferner stellt der Gegenkopf 30 vorzugsweise sicher, dass die Pins 12 der gerade beschriebenen Zeile sich nicht gegenseitig beeinflussen, indem eine weitere Reihe federnd gelagerter Gegen-Pins 31 an jedem aktuell beschriebenen Pin 12 einen Gegendruck erzeugt. Dadurch wird sichergestellt, dass jeder Pin 12 an seinem jeweiligen Beschreibe-Pin 21 anliegt. Durch diesen Gegendruck wird auf einfache und zuverlässige Weise verhindert, dass ein Pin 12, der höher als die benachbarten Pins verschoben wird, die benachbarten Pins durch Reibung mitnimmt. Dadurch wird sichergestellt, dass Letztere nicht weiter als gewünscht verschoben werden.

Vorzugsweise bereitet der Gegenkopf 30 die nächsten, noch nicht beschriebenen Zeilen für das Beschreiben vor, indem er sie in eine minimale Position und/oder Ausgangsposition verschiebt. Dies verhindert zugleich, dass die Beschreibe-Pins 21 die nachfolgenden Zeilen verändern. Das Vorbereiten erfolgt vorzugsweise durch in, vorzugsweise mehreren, Zeilen angeordneten Vorbereitungs-Pins 34. Vorzugsweise sind die Vorbereitungs-Pins 34 stufenweise in mehreren Zeilen angeordnet, um in ggf. auftretenden pathologischen Zuständen des Mediums 1 nicht die Pins 12 des noch unbeschriebenen Teils (siehe Pins 12c bis 12i) durch Reibung über den erlaubten Bereich hinaus zu schieben. Sollten Pins 12 nämlich zu weit über den erlaubten Bereich kommen, könnten sie aus dem Medium 1 fallen und damit die Stabilität des gesamten Mediums 1 gefährden. Letzteres lässt sich durch, insbesondere in drei Stufen angeordnete, Vorbereitungs-Pins 34 zuverlässig vermeiden.

Durch eine Aufnahmeeinrichtung 10 und/oder eine oder mehrere Vorschubeinrichtungen 9, 13, 14 und/oder Schlitten 17, 18 und/oder Zwischenplatten und/oder Führungen 17b, 18b (siehe Figur 2) wird das Medium 1 im Drucker gehalten bzw. das Medium 1 und/oder der Druckkopf 20 und Gegenkopf 30 vorzugsweise so positioniert, dass die Beschreibe-Pins 21 und Gegen-Pins 31 exakt auf die aktuelle Zeile ausgerichtet sind. Außerdem schieben die eine oder mehreren Vorschubeinrichtungen 9, 13, 14 das Medium 1 bzw. den Druck- und Gegenkopf nach dem Beschreiben Zeile für Zeile weiter, bis vorzugsweise alle Zeilen des Mediums 1 beschrieben sind.

Nach dem Beschreiben wird das Medium 1 in den Fixier-Zustand versetzt, wie im Zusammenhang mit Figur 1 beispielhaft erläutert, und aus dem Drucker genommen.

Da die Mechanik zur Positionierung der Beschreibe-Pins 21 je nach Länge der Zeile typischerweise 200 bis 300mal benötigt wird, sollte sie möglichst einfach im Aufbau bzw. günstig in der Herstellung sein.

Vor diesem Hintergrund ist es besonders bevorzugt, am Druckkopf 20 nur ein positionierendes Element 23 für die gesamte Zeile zu verwenden und für jeden Beschreibe-Pin 21 nur ein einfaches binäres Element 25 vorzusehen. Die Beschreibe-Pins 21 werden dabei gemeinsam durch das positionierende Element 23 von einer Minimalposition zu einer Maximalposition bewegt, aber nur solange, wie das jeweilige binäre Element 25 des Pins 21 dies zulässt. Ist die Soll-Position des jeweiligen Pins 21 erreicht, schaltet das zugehörige binäre Element 25 von "Bewegen" auf "Halten", und das Pin 21 bleibt an der aktuellen Position fixiert.

Während einer Längsbewegung (in z-Richtung) des positionierenden Elements 23 werden alle Beschreibe-Pins 21 in ihre gewünschte Lage entsprechend dem Profil der aktuellen Zeile gebracht, indem die binären Elemente 25 im richtigen Zeitpunkt von "Bewegen" auf "Halten" umschalten. Die Bewegung des Druckkopfs 20 ist dadurch als gleichmäßiges, mechanisches Hin-und-herBewegen realisierbar, beispielsweise mittels Exzenter-Antrieb oder durch Linearantrieb).

Die Information des Höhenfeldes, d.h. der Höhenverlauf in Zeilenrichtung, kann hierbei auf einfache Weise lediglich durch das gezielte Umschalten der binären Elemente 25 erreicht werden. Die Ist-Position des positionierenden Elements 23 wird kontinuierlich erfasst und mit der Soll-Position des jeweiligen Pins 21 vergleichen. Ist die Soll-Position erreicht, veranlasst die Steuerlogik das Umschalten des jeweiligen binären Elements 25.

Um die Haltekraft des binären Elements 25 weiter zu erhöhen, so dass die Pins 12, 31 besonders zuverlässig bewegt werden, ohne dass sich die Beschreibe-Pins 21 verschieben, kann zusätzlich ein kräftigeres, fixierendes Element 24 vorgesehen sein, das die Beschreibe-Pins 21 fest bzw. fester verankert. Dies passiert insbesondere, nachdem das positionierende Element 23 seine Endposition erreicht hat und somit alle Beschreibe-Pins 21 in der jeweils gewünschten Lage sind, aber noch bevor der Druckkopf 20 in das Medium 1 eintaucht.

Zur Veranschaulichung der bevorzugten Funktionsweise des Druckkopfs 20 wird im Folgenden zunächst ein Zyklus beim Beschreiben einer Zeile in einem Drucker ohne Gegenkopf beschrieben. Dieser Zyklus wird für jede Zeile des Mediums 1 wiederholt.
- Ausgangszustand: Die Beschreibe-Pins 21 sind in einer definierten End-Lage (Minimum, eventuell auch Maximum möglich) mit einigem Abstand unterhalb des Mediums 1. Die binären Elemente 25 aller Beschreibe-Pins 21 sind im Modus "Bewegen".
- Phase 1 "Setzen der Beschreibe-Pins": Das positionierende Element 23 bewegt sich kontinuierlich Richtung Medium 1 und nimmt die Beschreibe-Pins 21 dank der haftenden Kraft der binären Elemente 25 mit. Ist die gewünschte Höhe eines Pins 21 erreicht, wird das binäre Element 25 des jeweiligen Pins 21 auf "Halten" geschaltet. Dies wird bis zur maximalen Auslenkung fortgeführt, bis alle Beschreibe-Pins 21 in ihrer gewünschten Höhe fixiert sind und alle binären Elemente 25 auf "Halten" geschaltet sind.
- optionale Phase 2 "Fixieren mit größerer Kraft": Die Beschreibe-Pins 21 sind nur mit der relativ geringen Kraft des binären Elements 25 fixiert. Falls für Phase 3 eine höhere Kraft gewünscht bzw. bevorzugt sein sollte, wird in Phase 2 das fixierende Element 24 zur Erhöhung der Fixierkraft der Beschreibe-Pins 21 aktiviert. Die binären Elemente 25 können in einen beliebigen Zustand versetzt werden, optional auch in einen zusätzlichen Zustand erhöhter Haltekraft, oder in einen energiesparenden Standby-Zustand versetzt werden.
- Phase 3 "Prägen der Pins im Medium": Durch Bewegen des Druckkopfes 20 in Richtung Medium 1 drücken die Beschreibe-Pins 21 die Pins 12 der entsprechenden Zeile im Medium 1 in die gewünschte Lage.
- Phase 4 "Gegenkopf": Hier werden vorzugsweise Aktionen des Gegenkopfes 30 ausgeführt (diese werden weiter unten noch näher beschrieben).

Phasen 5 bis 7 "Ausgangszustand wiederherstellen": Hier werden die in den Phasen 1 bis 3 hergestellten Zustände wieder rückgängig gemacht.
- Phase 5: Der Druckkopf 20 wird wieder vollständig aus dem Medium 1 herausgezogen.
- Phase 6: Das fixierende Element 24 wird wieder deaktiviert. Die binären Elemente 25 werden auf "rückwärts Bewegen" gesetzt, wenn diese ebenfalls zum Rückführen der Beschreibe-Pins 21 geeignet sind. Andernfalls gibt es eine zusätzliche Einrichtung, die die Beschreibe-Pins 21 rückwärts mitnimmt.
- Phase 7: Das positionierende Element 23 wird wieder kontinuierlich in die Ausgangslage geschoben und nimmt die Beschreibe-Pins 21 mit, bis diese an einem End-Anschlag 26 anstehen. Eventuell wird dabei das Beschreibe-Pin 21 am positionierenden Element 23 abgestreift. Ist die Ausgangsposition erreicht, werden alle binären Elemente 25 in den "vorwärts Bewegen" Modus versetzt, und der Ausgangszustand ist wieder hergestellt.
- Phase 8 "Zeilenvorschub": Das Medium 1 und/oder die Beschreibe-Mechanik, insbesondere der Druckkopf 20, wird mittels einer Vorschubeinrichtung um eine Zeile weiter bewegt, und es wird mit Phase 1 für die nächste Zeile begonnen. Bei hexagonaler Pin-Anordnung im Medium 1 muss ggf. das Medium 1 auch um einen halben Pin-Durchmesser seitlich (d.h. in Zeilenrichtung bzw. x-Richtung) verschoben werden. Ein eventuell eingeschobener Gegenkopf 30 muss diese Bewegung mitmachen. Phase 8 kann auch gleichzeitig mit anderen Phasen passieren, solange der Druckkopf 20 vollständig aus dem Medium 1 ist, also während der Phasen 6 bis 8 und 1 bis 2.

Wie bereits vorstehend erwähnt, sind für Aufbau und/oder Funktionsweise des Gegenkopfs 30 zwei unterschiedliche bevorzugte Konzepte (asymmetrisches und symmetrisches Konzept) vorgesehen, welche nachfolgend näher beschrieben werden.

Beiden Ausführungen gemein sind die Vorbereitungs-Pins 34. Dies sind vorzugsweise fixe, unbewegliche Pins und/oder Leisten direkt am Gegenkopf 30, welche die nächsten, noch unbeschriebenen Zeilen in einen definierten Zustand bringen. Wie in Figur 3 ersichtlich, werden dadurch jeweils drei Zeilen des Mediums 1, die vom gegenüberliegenden Druckkopf 20 als nächstes beschrieben werden, nach und nach weiter eingeschoben, bis diese die Minimalhöhe erreichen. Grundsätzlich könnte auch der federnd gelagerte Gegen-Pin 31 den aktuellen Pin 12b in diese Position bringen. Durch die Federung ist das aber nicht immer bzw. unbedingt gewährleistet. Auch hat das stufenweise Anpassen den Vorteil, dass bei keinen Vorzuständen des Mediums 1 die Pins 12 aus dem Rahmen gedrückt werden können.

Vorzugsweise kann auch die ebene Fläche am Schreibkopf als Ausrichtelement bzw. als eine Art Vorbereitungs-Pin wirken, das bzw. der verhindert, dass die Pins über den Minimal-Zustand hinaus geschoben werden bzw. diese von der anderen Seite in den Ausgangszustand schieben, sollten die Pins ursprünglich über den Bereich hinausgehen.

Bei dem in Figur 3 gezeigten asymmetrischen Konzept wird ein Gegenkopf 30 verwendet, der sich vom Druckkopf 20 unterscheidet. Der Gegenkopf 30 besitzt eine Reihe federnd gelagerter Gegen-Pins 31 für die aktuell beschriebenen Pins 12b und eine Reihe federnd gelagerter Gegen-Pins 32, die zusätzlich fixierbar sind, z.B. mittels einer Bremse 33, und das Profil der zuletzt beschriebenen Zeile 12a fixieren. Der Ablauf ändert bzw. ergänzt sich wie folgt:
In Phase 2 wird die aktuelle Zeile 12b vom Druckkopf 20 beschrieben. Dabei ist der Gegenkopf 30 bereits im Medium 1 und hält die zuletzt beschriebene Zeile 12a über die Gegenpins 32 mit der Bremse 33 fixiert. Die Reihe der Gegen-Pins 31 liegt auf der Reihe der aktuell zu beschreibenden Pins 12b auf und sorgt dafür, dass die Pins 12b an den Beschreibe-Pins 21 anliegen.

Nachdem der Druckkopf 20 vollständig im Medium 1 ist, beginnt die Gegenkopf-Phase 4: Es wird der Gegenkopf 30 mit weiterhin fixierter Bremse 33 herausgezogen. Erst wenn er ganz herausgezogen ist, wird die Bremse 33 gelöst, und die Gegen-Pins fahren (gedämpft) bis zum Anschlag heraus. Würde die Bremse 33 vorher gelöst werden, würden die Gegen-Pins die Pins 12 im Medium 1 möglicherweise verschieben.

Der Gegenkopf 30 wird um eine Zeile weiter bewegt und wieder in das Medium eingeführt. Die Reihe der Gegen-Pins 32 bekommt nun das Negativ des aktuell geschriebenen Profils aufgeprägt.

Ist der Gegenkopf 30 vollständig eingeschoben, wird die Bremse 33 wieder aktiviert, um das Profil zu fixieren. Die Reihe der Gegen-Pins 31 liegt nun auf den Pins 12c der neuen aktuellen Zeile auf, die bereits durch die Vorbereitungs-Pins 34 in den vorigen Zeilen-Zyklen in die Minimalstellung verschoben wurden.

Dann geht es weiter mit Phase 5, und der Druckkopf 20 wird wieder herausgezogen. Würde die Bremse 33 nicht aktiv sein, würden die Gegen-Pins 32 die aktuell geschriebene Zeile wieder herausdrücken.

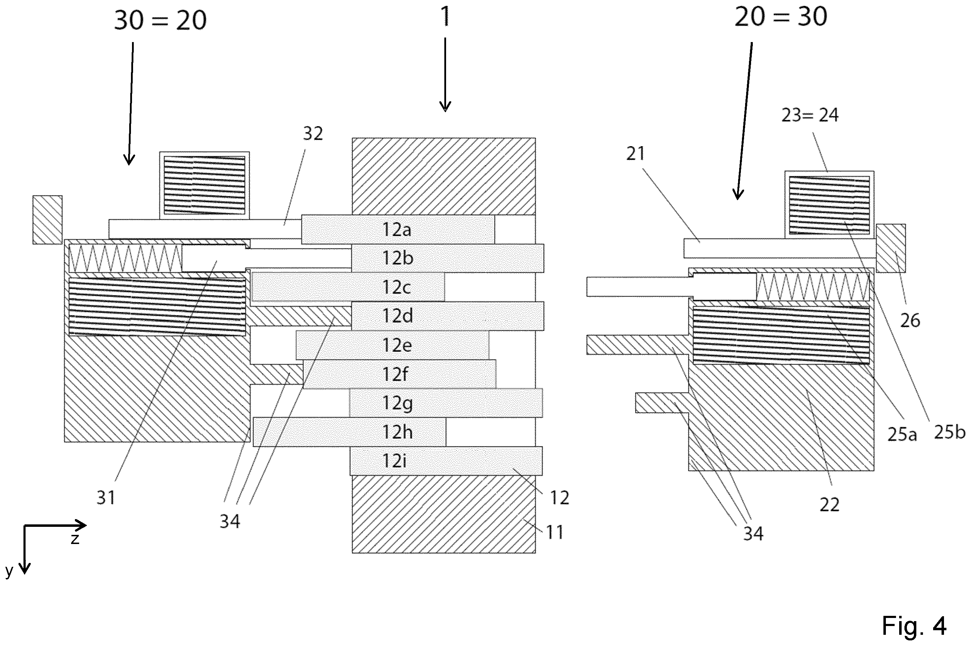

Figur 4 zeigt eine schematische Schnittdarstellung eines Beispiels einer Vorrichtung bzw. eines Druckers nach dem symmetrischen Konzept mit einem Druckkopf 20, welcher zusätzlich als Gegenkopf ausgebildet ist, und einem Gegenkopf 30, welcher zusätzlich als Druckkopf ausgebildet ist. Auch in diesem Beispiel weist das binäre Element 25 Elektromagnete auf. Wie bei Figur 3 ist auch hier ein Schnitt in der y-z-Ebene durch eine in y-Richtung verlaufende Spalte von Pins 12 dargestellt, wobei die Zeilen in x-Richtung senkrecht zur Zeichnungsebene verlaufen. Jeder bzw. jede der hier dargestellten Pins 21, 31, 32, 34, Federn und Elektromagneten 25 im positionierenden Element 23 des Druckkopfs 20 bzw. Gegenkopfs 30 existiert vielfach (in Zeilenrichtung, d.h. x-Richtung) übereinander, so dass gleichzeitig jeweils eine ganze Zeile beschrieben werden kann.

Anders als beim asymmetrischen Konzept wird hier kein eigener bzw. "reiner" Gegenkopf 30 verwendet, sondern der Gegenkopf 30 mit Druckkopf-Funktionen bzw. -Elementen und der Druckkopf 20 mit Gegenkopf-Funktionen bzw. -Elementen versehen, so dass das Medium 1 quasi mit zwei Druckköpfen 20, 30 von beiden Seiten abwechselnd bedruckt werden kann. Während der eine das Profil der letzten Zeile (die er gerade geprägt hat) hält, kann der andere die nächste Zeile prägen. Dabei wandert jeder Druckkopf um zwei Zeilen weiter.

Das ist besonders praktisch bei einer hexagonalen Anordnung der Stifte 12 im Medium 1, da hier jede zweite Zeile um ein halbes Pin verschoben ist. Beim asymmetrischen Konzept werden daher beide Köpfe 20, 30 zusätzlich zum Zeilenvorschub (in y-Richtung) auch noch abwechselnd um einen halben Pin in Zeilenrichtung (in x-Richtung) nach links bzw. rechts verschoben. Beim symmetrischen Konzept ist dieser zusätzliche Versatz in Zeilenrichtung nicht erforderlich, was die Vorschub-Mechanik noch einfacher macht.

Ein Druckkopf 20 bzw. 30 druckt das Positiv des Höhenfeldes auf z.B. den geraden Zeilen, der andere Druckkopf 30 bzw. 20 druck das Negativ von der anderen Seite auf den ungeraden Zeilen. Beide Druckköpfe 20, 30 sind vorzugsweise gut kalibriert, um systematische Offsets zwischen den geraden und ungeraden Zeilen zuverlässig zu vermeiden.

Neben den federnd gelagerten Gegen-Pins 31 sind auch die Vorbereitungs-Pins 34 an beiden Druckköpfen 20, 30 vorgesehen. Diese arbeiten nur auf jeden zweiten Pin 12 des Mediums 1 jeweils gegengleich bzw. in jeweils entgegengesetzter bzw. spiegelbildlicher Weise.

Im Gegensatz zum asymmetrischen Konzept arbeitet das symmetrische Konzept mit fast der doppelten Geschwindigkeit, benötigt aber zwei aufwändiger gestaltete Druckköpfe 20, 30, insbesondere mit Beschreibe-Pins 21, positionierendem Element 23 und binärem Element 25 am Gegenkopf 30 und Gegenpins bzw. Vorbereitungspins am Druckkopf 20. Somit hat auch das asymmetrische Konzept gegenüber dem symmetrischen Konzept Vorteile.

Im Folgenden werden weitere bevorzugte Ausführungen des Druckkopfs 20 mit jeweils unterschiedlichen Ausgestaltungen des binären Elements 25 näher beschrieben.

Bei einer Ausgestaltung (im Folgenden auch "Variante 1" genannt), siehe Figu-ren 3 und 4, sind die Beschreibe-Pins 21 magnetisch anziehbar ausgeführt und haften entweder auf dem positionierenden Element 23 oder einem fixen Element 22. Auf dem positionierenden Element 23 ist ein Elektromagnet 25b pro Pin 21 angebracht, welcher zu Beginn in Phase 1 "sein" Beschreibe-Pin 21 hält und es mitschiebt. Ist die Sollhöhe (in z-Richtung) erreicht, schaltet der Elektromagnet 25b ab, und der Pin 21 wird von einem gemeinsamen Elektromagneten 25a im fixen Element 22 angezogen und dort auf der entsprechenden Höhe fixiert. Das positionierende Element 23 ist hier auch gleichzeitig das fixierende Element 24: In Phase 2 wird es auf das fixe Element 22 gepresst und fixiert somit die Beschreibe-Pins 21.

Die Ausgangslage wird erreicht, indem in Phase 5 der Elektromagnet 25b ein- und der Magnet 25a ausgeschaltet wird. Damit haften die Pins 21 am positionierenden Element 23, das sich wieder zurück bewegt. Das Pin 21 wird unten von einer End-Platte 26 aufgehalten und streift sich am positionierenden Element ab, bis die Ausgangslage wiederhergestellt ist. Dort schaltet der gemeinsame Magnet 25a wieder ein, so dass die Beschreibe-Pins 21 zwar auf dem positionierenden Element 23 haften, bei Ausschalten des jeweiligen Magneten 25b aber sofort vom Magneten 25a am fixen Element 22 gehalten werden.

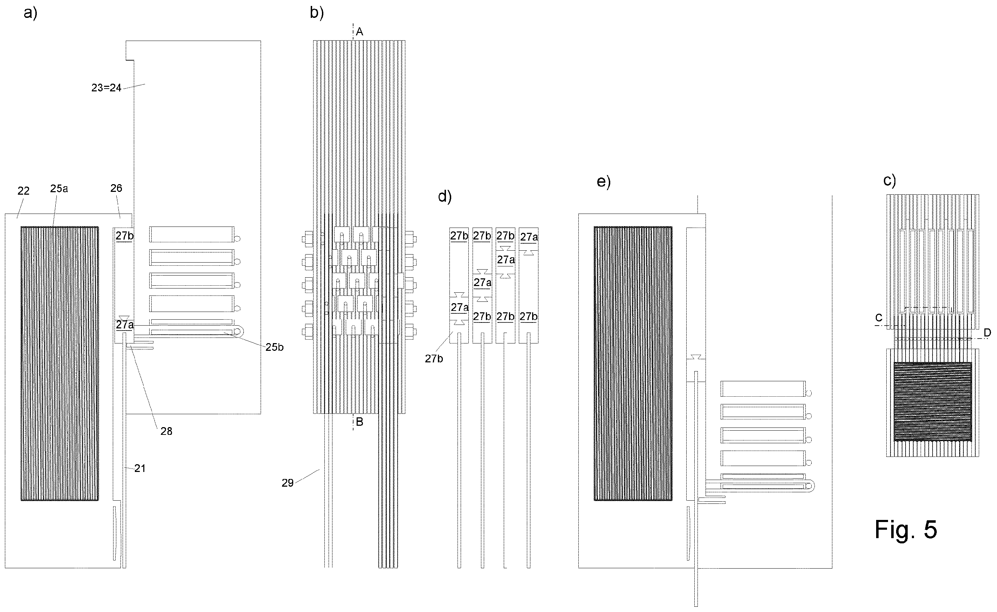

Figur 5 zeigt eine weitere Ausgestaltung (im Folgenden auch "Variante 2" genannt) des binären Elements 25 mit zwei Elektromagneten 25a, 25b und nichtmagnetischen Beschreibe-Pins 21 in einer Vorderansicht des Ausgangszustands (a), in Seitenansicht, links (b), in Draufsicht (c), mit weiteren Plättchen (d) und in Vorderansicht im Zustand in den Phasen 3 bis 5 (e).

Vorzugsweise werden hier Elektromagneten 25b mit Abmessungen von 4x5x28 mm, einem Hufeisen-Kern mit 1 mm Durchmesser und einer 4x4x22 mm Spule auf einem Schenkel verwendet. Diese sind vorzugsweise in fünf Reihen angebracht, um Platz zu finden. Die Reihen sind jeweils versetzt, sodass auf einem Weg von 10 mm kein direkt benachbarter Magnet den Pin 21 durch Streumagnetfelder beeinflusst.

Hier ist der Beschreibe-Pin 21 nicht magnetisch und in ein Plättchen 27a, 27b eingeklemmt, das einen ferromagnetischen Teil 27a, welcher nur im Bereich des jeweiligen Elektromagneten magnetisch ist, und einen nicht magnetischen Teil 27b aufweist. Damit wirken die Magnetkräfte nur punktuell, und der Pin 21 haftet immer nur auf einer der beiden Elemente, d.h. am fixen Element 22 oder positionierenden Element 23.

In Phase 1 bewegt sich das positionierende Element 23 nach unten und nimmt das Plättchen 27a, 27b und damit den Beschreibe-Pin 21 solange mit, bis der Magnet 25b abgeschaltet wird. Dann haftet das Plättchen 27a auf dem durchgehenden Magneten 25a des fixen Elements 22.

In Phase 2 wird das positionierende Element 23 auf das fixe Element 22 gepresst und klemmt damit oben das Plättchen 27a, 27b und unten den Beschreibe-Pin 21 ein.

Am Rückweg in Phase 5 bleibt in dieser Ausführung das Plättchen 27a, 27b auf dem fixen Element 22 mit Magnet 25a (eingeschaltet) und Magnet 25b (ausgeschaltet) und wird vom Element 23 mittels der Ausnehmung 28 nach unten mitgenommen, bis es auf der integrierten Endplatte 26 ansteht. Die Endplatte 26 ist hier optional, da das Plättchen 27a, 27b mit der Ausnehmung 28 ohnehin schon in eine definierte Lage gebracht wird.

Eine Besonderheit hier sind außerdem Trennfolien 29 zwischen den einzelnen Plättchen/Pins, damit sich diese nicht gegenseitig beeinflussen. Die Folie 29 ist fix im Element 22 verankert (z.B. durch Laminieren von abwechselnd Folie und Element-Schicht). Im Element 23 sind Ausnehmungen, in denen die Folien 29 bei einer Bewegung gegeneinander gleiten können.

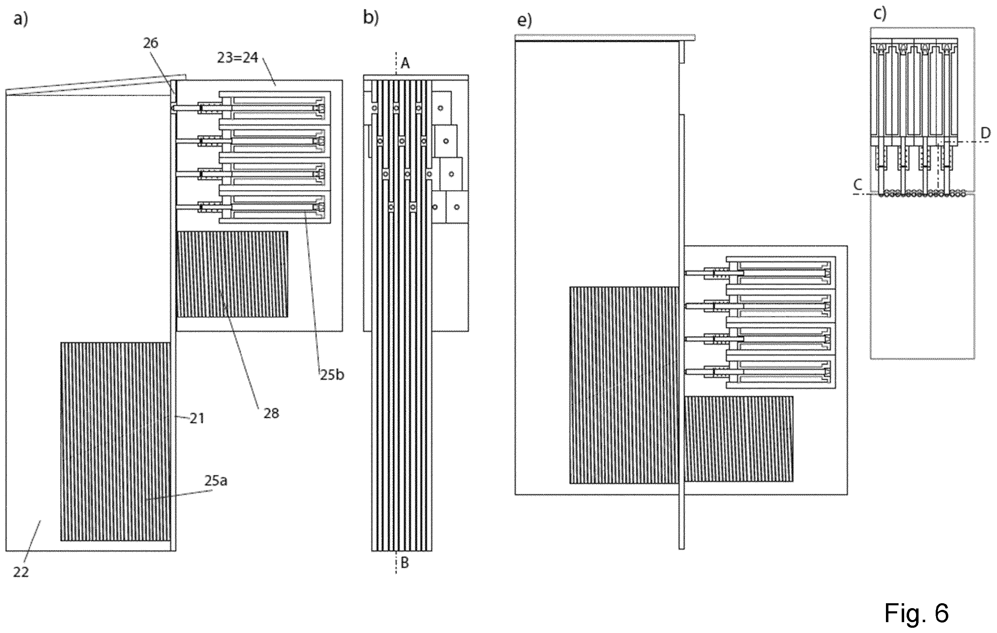

Figur 6 zeigt eine weitere Ausgestaltung (im Folgenden auch "Variante 3" genannt) des binären Elements 25 mit Hubmagnet in einer Vorderansicht des Ausgangszustands (a), in Seitenansicht, links (b), in Draufsicht (c) und in Vorderansicht im Zustand in den Phasen 3 bis 5 (d).

In dieser Ausführung sind die Beschreibe-Pins 21 magnetisch und haften am fixen Element 22 wegen des dort eingebauten Elektromagneten 25a. Die binären Elemente sind hier Hubmagnete 25b, die wegen ihrer Größe von vorzugsweise 4x6x20 mm in vier Reihen angebracht sind. Bei ausgeschaltetem Hubmagneten ragt der (in der vorliegenden Darstellung oberste) Stift des positionierenden Elements 23 ca. 1 mm aus dem positionierenden Element 23 heraus. Bewegt sich in Phase 1 das Element 23 nach unten, nimmt der Stift den Beschreibe-Pin 21 mit und streift diesen am Element 22 entlang. Ist die Sollhöhe erreicht, zieht der Hubmagnet 25b den Stift ein, und der Pin 21 bleibt auf der Höhe am Element 23 haften.

In Phase 2 pressen sich fixes Element 22 und positionierendes Element 23 aufeinander und fixieren damit die Beschreibe-Pins 21.

In Phase 5 ist nur der Elektromagnet 28 als Rückhol-Element aktiv und nimmt die Pins 21 mit, bis diese am End-Kamm 26 anstehen. Da die Pins 23 in dieser Ausführung unterschiedliche Längen haben, ist das End-Element 26 als Kamm von Stiften unterschiedlicher Länge ausgeführt. Da die Hubmagnete 25b unter den Pin 21 einhaken, wird der Kamm 26 am Ende von Phase 7 ein Stück herausgezogen. Zuvor werden die Pins auf dem Element 22 fixiert, vorzugsweise durch Ausschalten des Magneten 28 und Einschalten des Magneten 25a. Das positionierende Element 23 fährt darauf hin noch ein Stück weiter, hebt damit den Kamm 26 und lässt am Ende alle Hubmagneten 25b wieder heraus.

Auch hier können Trennfolien eingebaut werden, wenn erforderlich.

Abgesehen von den vorstehend beschriebenen drei Ausgestaltungen sind noch viele andere Ausgestaltungen denkbar. Statt magnetischer Felder könnten z.B. elektrostatische Felder verwendet werden. Ein Andrücken und/oder Abstoßen könnte z.B. mittels Pneumatik, welche z.B. durch elektronische Ventile geschaltet wird, oder mittels Piezo-Aktoren realisiert werden.

Ferner ist es möglich, den Kamm 26 bei der zuletzt beschriebenen Variante (siehe Figur 6) durch Kerben im Beschreibe-Pin 21 oder Verwendung von Plättchen 27a wie bei der davor beschriebenen Variante (siehe Figur 5) zu realisieren.

Ein Haften der Pins kann mittels Permanentmagneten auf positionierendem und starrem Element und Wechsel durch Anstoßen mit einem Hubmagneten realisiert werden.

Ferner kann ein Haften der Pins mittels Permanentmagneten auf nur einem Element und Wechsel zum anderen durch Anpressen mit einem Hubmagneten realisiert werden.

Im Folgenden werden weitere bevorzugte Ausführungen des Gegenkopfs 30 (asymmetrisches Konzept) näher beschrieben.

Bei einer bevorzugten Ausführung werden anstelle von Spiral-Druckfedern für die Gegen-Pins 31, 32, wie in Figur 3 und 4 dargestellt, Blattfedern verwendet, die zwar mehr Platz beanspruchen, dafür aber seltener verklemmen, einfacher handhabbar und robuster sind. Auch deren Herstellung ist in der Regel günstiger als bei Spiralfedern, da die Blattfedern aller Pins aus einem einzigen Federblech hergestellt werden können, ähnlich einem Kamm.

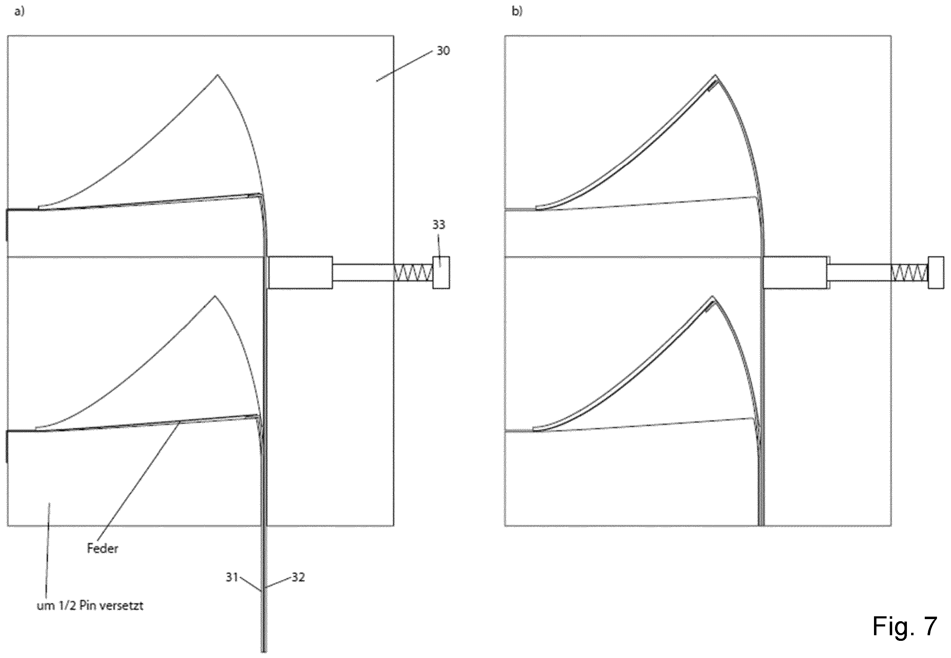

Figur 7 zeigt eine Schnittdarstellung eines Ausschnitts aus dem Gegenkopf 30 mit einer solchen Blattfeder für hexagonale Pin-Anordnung in einer Phase, in welcher die Gegen-Pins 31, 32 voll ausgefahren sind und die Bremse 33 inaktiv ist und in einer Phase, in welcher die Gegen-Pins 31, 32 voll eingedrückt sind und die Bremse 33 aktiv ist.

Die jeweilige Blattfeder eines Pins 31 bzw. 32 biegt sich allerdings von der Pin-Achse weg, und würde den Beschreibe-Pin 21 ab einer gewissen Auslenkung nicht mehr berühren. Die Pins 31, 32 selbst sind allerdings sehr lang und dünn, und können selbst gebogen werden, um dem Verlauf der Blattfederspitze zu folgen, wenn sie beispielsweise aus Federstahl gefertigt sind.

Vorzugsweise sind die Beschreibe-Pins 21 dünner als die Pins, um garantiert nur das eine Pin zu beeinflussen. Eine Führung der Beschriebe-Pins ist demnach notwendig, um die Abstände einzuhalten.

Da der Gegenkopf 30 vorzugsweise zwei parallele Reihen an Gegenpins 31, 32 aufweist, sind vorzugsweise Führungen beider Reihen untergebracht. Eine Möglichkeit zur Realisierung einer solchen Führung sind z.B. Bowdenzüge für die einzelnen Beschreibe-Pins 21. Dies hat den Vorteil, dass durch die biegsamen Bowdenzüge die Aktoren/Federn über ein größeres Volumen verteilt werden können. Diese Ausführung wird vorzugsweise beim symmetrischen Konzept eingesetzt. Eine weitere Möglichkeit stellen Trennfolien dar, die zwischen den Spalten und ggf. auch zwischen den Zeilen eingebracht werden (siehe Figur 7). Es können darüber hinaus aber auch andere Querschnitte der Beschreibe- und Gegen-Pins verwendet werden, solange diese im Profil der Pins 12 des Mediums Platz finden.

Im Folgenden werden weitere bevorzugte Ausführungen des Druckkopfs 20 bzw. des entsprechend mit Druckfunktionen ausgestatteten Gegenkopfs 30 (symmetrisches Konzept) näher beschrieben.

Vorzugsweise können die vorstehend beschriebenen bevorzugten Ausführungen der Gegen-Pins 31 für den asymmetrischen Gegenkopf mit den vorstehend beschriebenen bevorzugten Ausführungen des Druckkopfs, insbesondere der binären Elemente (Varianten 1 bis 3), kombiniert werden, um einen kombinierten Druck-/Gegenkopf 20 für das symmetrische Konzept zu erhalten.

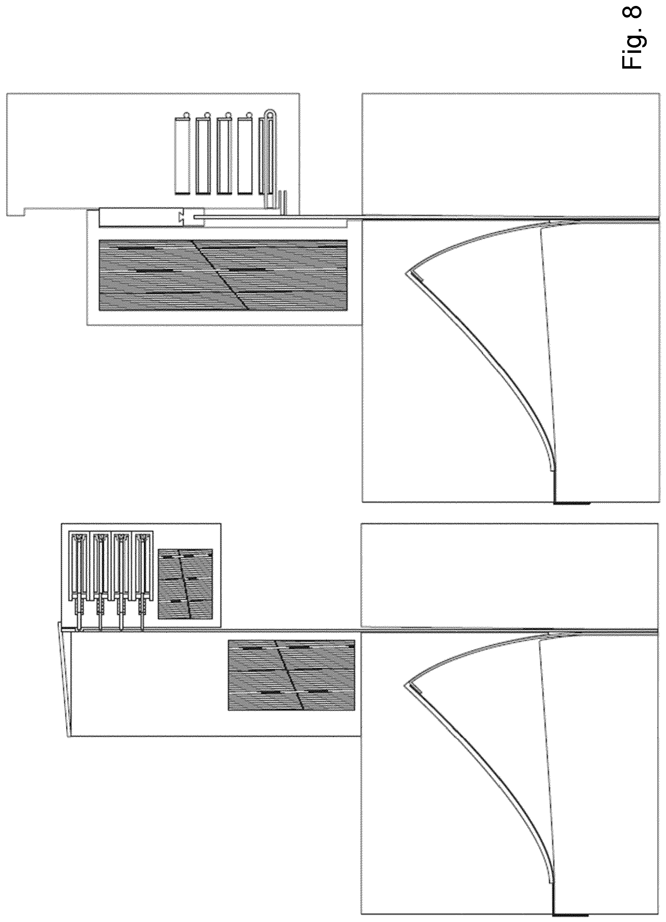

Figur 8 zeigt zwei Beispiele für symmetrische Druckköpfe mit federnd gelagerten Gegen-Pins in der Variante 3 (links) bzw. Variante 2 (rechts). Dabei wird der untere Teil aus Figur 7 als untere Stufe an einem Druckkopf (siehe Figur 5 und 6) angebracht. Die vorstehenden Ausführungen gelten entsprechend.

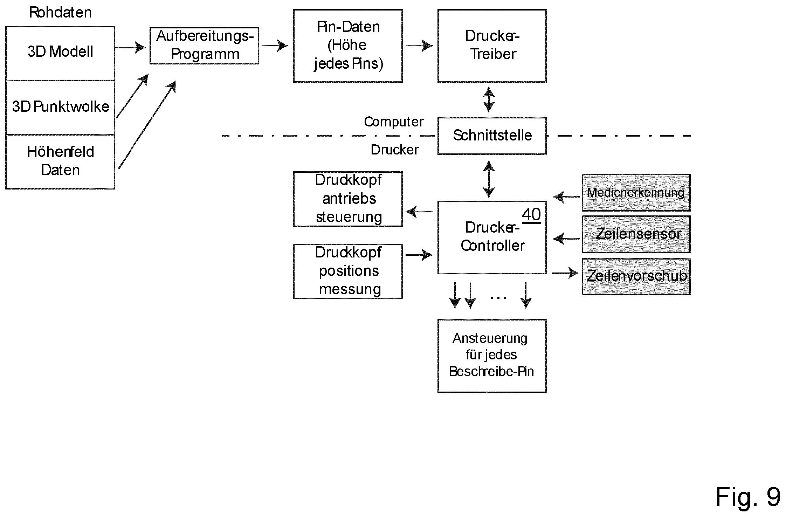

Figur 9 zeigt ein Beispiel eines Blockdiagramms zur Veranschaulichung einer Anwendung der Vorrichtung bzw. des Druckers beim Beschreiben eines Mediums bzw. eines entsprechenden Verfahrens.

Am Anfang stehen verschiedenste Rohdaten, die am Medium ausgegeben bzw. in das Medium eingeprägt werden sollen.

Diese können z.B. 3D-Modelle aus diversen CAD Programmen sein, oder auch 3D Punktwolken von einem 3D-Scanner. Da das Medium nur Höhenfelder darstellen kann, müssen solche Daten erst in ein Höhenfeld umgewandelt werden. Dazu wählt man eine geeignete Ansicht des 3D-Modells, und damit eine Projektion von 3D auf 2D, wie bei der Betrachtung am Bildschirm. Mit dieser Projektion wird das Objekt gerendert, und das Tiefenbild (Z-Buffer) als Höhenfeld verwendet. Bei Punktwolken müssen gegebenenfalls noch entstehende Löcher ergänzt werden, wo keine Punkte gescannt werden konnten.

Höhenfelder aus dem vorherigen Schritt oder Höhenfelder als Rohdaten werden dann auf Pin-Daten umgerechnet. Da im Medium jeder Pin nur einen einzigen Höhenwert einnehmen kann, bestehen die Pin-Daten aus den einzelnen Höhenwerten aller Pins im Medium. Die notwendige Aufbereitung entspricht der Rasterung im klassischen Druck. Das Höhenfeld wird an den Positionen der Pins in geeigneter Art gesampelt (z.B. Maximum oder Durchschnitt aller Höhenwerte im Fußabdruck des Pins), und damit für jedes Pin ein gewünschter Höhenwert ermittelt. Hierfür ist die Kenntnis über die genaue Art des verwendeten Mediums nötig, insbesondere die Anzahl der Pins in x- und y-Richtung, Art des Pin-Rasters (orthogonal, hexagonal), Größe des Mediums und Länge der Pins.

Gegebenenfalls werden die Pin-Daten noch angepasst, beispielsweise um zu hohe Kanten oder einzelne weit rausragende Pins zu vermeiden, die sonst leicht brechen oder verbogen werden könnten.

Diese Pin-Daten werden über einen Drucker-Treiber und Schnittstelle zu einem Drucker-Controller 40 geschickt, welcher im Zusammenhang mit der vorliegenden Offenbarung auch als Steuerungseinrichtung bezeichnet wird und/oder zumindest einen Teil der Funktionen der Steuerungseinrichtung ausführt.

Der Druckertreiber kümmert sich auf der Computer-Seite um die Kommunikation mit dem Drucker, schickt die Pin-Daten weiter und bekommt Status-Informationen vom Drucker, die an den User weitergegeben werden können (z.B. Druckfortschritt, Fehler etc.). Die Schnittstelle ist ein geeignetes Daten-übermittlungsprotokoll (z.B. USB, WLAN).

Der Drucker-Controller 40 nimmt die Pin-Daten in Empfang, schickt Feedback über die Schnittstelle an den Drucker-Treiber, liest Sensoren im Drucker aus, und steuert die Aktuatoren im Drucker geeignet an, um die Pins wie vorgegeben zu verschieben.

Über eine optionale Medienerkennung (Barcode, Chip, sonstige Codierung am Medium) erkennt der Controller 40 ob und ggf. welches Medium im Drucker eingelegt ist.

Ist alles für den Druck bereit, wird der Druckkopfantrieb eingeschaltet und angesteuert (je nach mechanischer Ausführung, z.B. Einschalten des Antrieb-Motors; oder exakte Choreographie, wenn mehrere Aktuatoren für die Bewegung notwendig sind). Außerdem werden laufend die gemeinsamen Aktoren (z.B. Elektromagnete) angesteuert.

Zu Beginn der Phase 1 werden über die Ansteuerung der Beschreibe-Pins alle binären Elemente auf "Bewegen" gestellt und die Soll-Positionen der Pins der aktuellen Zeile aus den Pin-Daten ausgelesen.

Über die Druckkopfpositionsmessung wird laufend die aktuelle Ist-Position der gemeinsam bewegten Beschreibe-Pins gemessen. Alternativ ist im Falle eines Schrittmotors die jeweilige Ist-Position in der Steuerungseinrichtung bekannt. Es wird für jeden Pin der Zeile die Soll-Position mit der Ist-Position vergleichen. Ist die Soll-Position erreicht, wird über die Ansteuerung der Beschreibe-Pins das binäre Element des jeweiligen Pins auf "Halten" gesetzt.

Dies wird wiederholt, bis die Phase beendet ist und alle binären Elemente auf "Halten" stehen. Die Druckmechanik prägt dann die aktuelle Zeile in das Medium ein, führt die Beschreibe-Pins in den Grundzustand und das Beschreiben der nächsten Zeile beginnt.

Wenn der Zeilenvorschub nicht fix mit dem Druckkopf-Antrieb verbunden ist, kann ein optionaler Zeilensensor die genaue Position der nächsten Zeile im Medium erkennen, damit der Zeilenvorschub angesteuert werden kann, bis die Zeile im Medium exakt mit den Beschreibe-Pins übereinstimmt.

Dies wird fortgeführt, bis alle Zeilen beschrieben sind. Dann wird der Antrieb abgeschaltet, und das Ende signalisiert. Das bedruckte Medium kann entnommen werden.

Die oben dargestellten Versionen mit Gegen-Pins, Vorbereitungs-Pins und das fixierende Element der Beschreibe-Pins sind Möglichkeiten, die bei verschiedenen Medien funktionieren, da sie die verschiedenen Kräfte auf die Pins geeignet trennen. Unter Umständen sind aber nicht alle beschriebenen Maßnahmen in Kombination notwendig.

Kann man davon ausgehen, dass die Medien vor dem Beschreiben auf jeden Fall im Ausgangszustand sind (z.B. alle Pins in der minimalen Position bei asymmetrischem Konzept), können die Vorbereitungs-Pins entfallen.

Ferner müssen die Vorbereitungs-Pins nicht zwingend einzelne Pins sein, sondern können auch als dünne durchgehende Platte oder als Steg zusammengefasst werden, solange dessen Fußabdruck nur eine Zeile an Pins berührt.

Kann man eine gegenseitige Beeinflussung der Pins im Medium ausschließen, können die Gegen-Pins (teilweise) entfallen. Dies könnte durch besonders leichtgängige Pins oder durch mechanische Trennung erreicht werden, beispielsweise durch Trennfolien zwischen Zeilen und/oder Spalten, oder durch einzeln gelagerte Pins.

Ist das Medium besonders leichtgängig und reicht die Haltekraft der binären Elemente der Beschreibe-Pins aus, um die Medien-Pins zu bewegen, kann das Halteelement der Beschreibe-Pins entfallen.

Sollte auch die Haltekraft während des Bewegens der Beschreibe-Pins ausreichen, kann auch die Bewegung des fixen Elements eingespart werden, so dass direkt während des Positionierens der Beschreibe-Pins die Medien-Pins gleich mitbewegt werden.

Mit dem vorstehend beschriebenen Drucker können Medien mit unterschiedlicher Auflösung (Pin-Querschnitt) beschrieben werden, wenn die Pin-Durchmesser ein (geeignetes) Vielfaches der Durchmesser der Beschreibe-Pins sind. Hierbei wird die Pinansteuerung (bestimmte Beschreibe-Pins können z.B. unbenutzt bleiben oder werden gemeinsam für ein Medien-Pin verwendet, ggf. müssen ferner Zeilen ausgelassen werden) und gegebenenfalls der Vorschub angepasst.

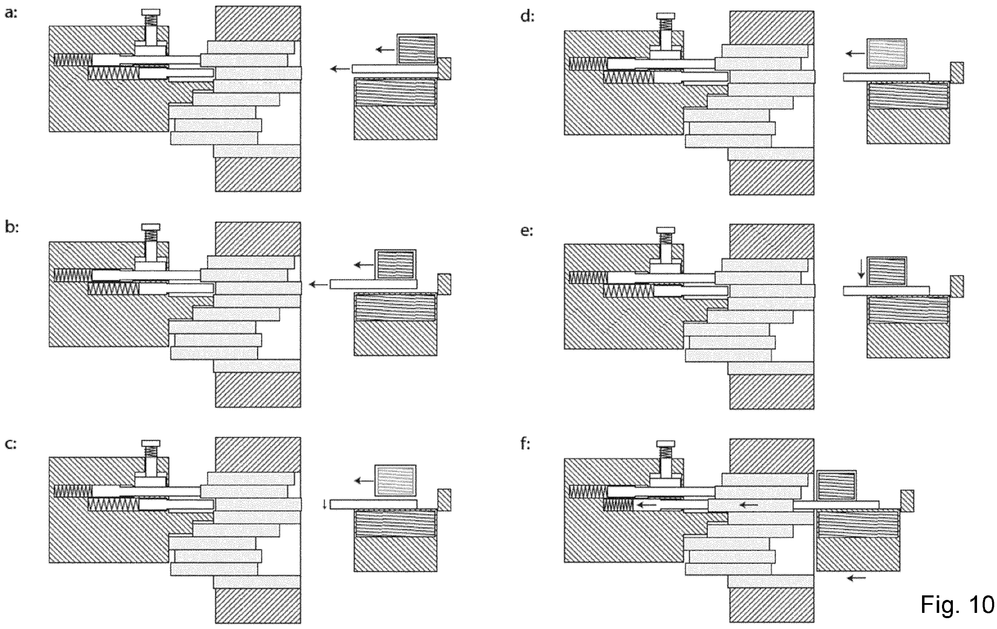

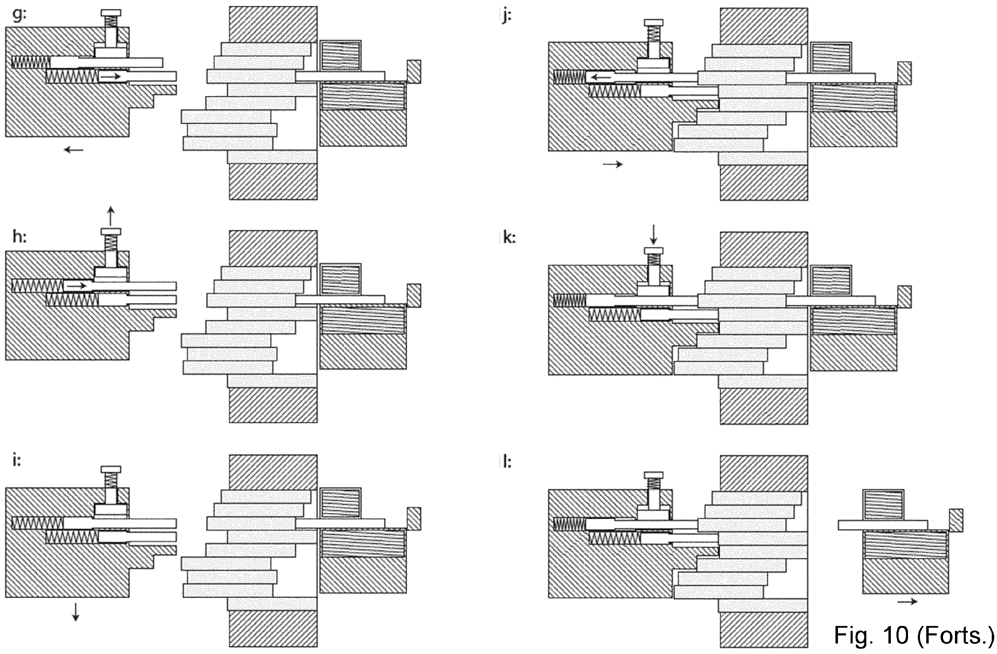

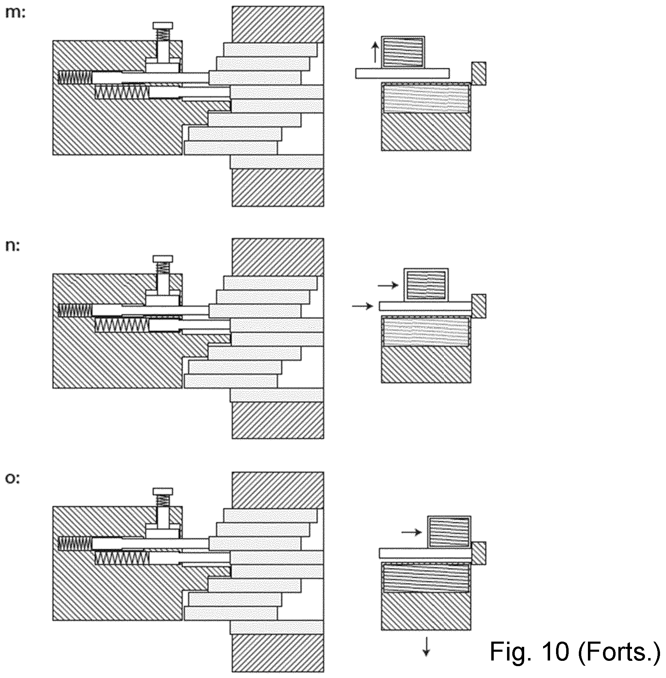

Figur 10 zeigt eine schematische Schnittdarstellung eines weiteren Beispiels einer Vorrichtung bzw. eines Druckers nach dem asymmetrischen Konzept zur Veranschaulichung eines vollständigen Zyklus zum Prägen der 3. Zeile und Vorbereiten zum Prägen der 4. Zeile. Bezüglich Aufbau und Funktionsweise der Vorrichtung bzw. des Druckers gelten die vorstehenden Ausführungen im Zusammenhang mit Figur 3 entsprechend.
a) Ausgangszustand. Der Gegenkopf ist positioniert für 3. Zeile, Stifte der vorhergehenden (2.) Zeile werden mit fixierten Gegenstiften gehalten, Stifte der nächsten (4.) Zeile werden mit Vorbereitungsstiften gehalten, Stifte der aktuellen (3.) Zeile sind durch Gegenstifte mit Gegenkraft beaufschlagt. Schreibkopf: alle Positionierstifte in Ausgangsposition, alle Halteelemente in Status "Bewegen" (in dieser Ausführung durch eingeschalteten Elektromagnet dargestellt).
b) Halteelemente bewegen sich Richtung Medium. Positionsstift dieser Spalte hat seine Position erreicht.
c) Halteelement dieser Spalte schaltet auf Status "Halten" (in dieser Ausführung ausschalten des Elektromagneten. Der Positionierstift haftet auf dem fixen Elektromagnet).
d) Das Positionierelement bewegt sich weiter, so dass Positionierstifte in anderen Spalten bis zur Maximalauslenkung bewegt werden können. Spätestens dort sind alle Halteelemente in Status "Halten".
e) Positionierstifte aller Spalten sind in Position. Positionierstifte werden zur Erhöhung der Haltekraft zusätzlich fixiert (Hier durch Pressen der Halteelemente auf die Positionierstifte).
f) Schreibkopf wird in Medium bewegt, Stifte des Mediums der aktuellen Zeile werden durch Positionierstifte verschoben, Gegenkraft der Gegenpins der 3. Zeile gewährleisten, dass alle Stifte des Mediums auf Positionsstifte aufliegen. Stifte des Mediums der 2. und 4. Zeile werden durch Stifte des Gegenkopfs in Position gehalten.
g) Gegenkopf wird aus Medium bewegt.
h) Wenn der Gegenkopf die Endposition erreicht hat, wird gemeinsames Halteelement der Gegenstifte gelöst und Gegenstifte gehen durch Federn in Ausgangsposition.
i) Zeilenvorschub des Gegenkopfes. Bei manchen Medien (z.B. hexagonale Anordnung zylindrischer Stifte) muss der Kopf auch quer verschoben werden, damit Gegenstifte und Stifte des Mediums der nächsten Zeile entsprechen).
j) Gegenkopf wird in Medium bewegt. Gegenstifte nehmen die Position der Stifte des Mediums der 3. Zeile ein, die weiterhin durch Positionierstifte gehalten werden.
k) Gegenstifte werden durch das gemeinsame Halteelement in ihrer Position fixiert.
l) Schreibkopf wird aus Medium bewegt.
m) Erhöhte Haltekraft wird beendet. Halteelemente schalten auf Status "Zurückbewegen" (ähnlich zu "Bewegen", in dieser Ausführung unterschiedlich, da gemeinsamer Haltemagnet ausgeschaltet ist).
n) Halteelemente bewegen sich Richtung Ausgangsposition und bewegen Positionierstifte zurück bis zum Endanschlag.
o) Alle Halteelemente und Positionierstifte sind in Ausgangsposition. Zeilenvorschub des Schreibkopfes. Bei manchen Medien (z.B. hexagonale Anordnung zylindrischer Stifte) muss Kopf auch quer verschoben werden, damit Gegenstifte und Stifte des Mediums der nächsten Zeile entsprechen).

## Patentansprüche

1. Vorrichtung zur Erzeugung einer dreidimensionalen Struktur in einem Medium (1) mit
- einer Aufnahmeeinrichtung (10), welche dazu eingerichtet ist, ein Medium (1) aufzunehmen, welches eine Vielzahl von in mehreren Zeilen parallel zueinander angeordneten Stiften (2, 12) aufweist, welche in Längsrichtung einzeln verschiebbar sind, und
- mindestens einem Schreibkopf (20), welcher mehrere in einer Zeile angeordnete, einzeln ansteuerbare Positionierstifte (21) aufweist, welche dazu eingerichtet sind,
- jeweils eine vorgegebene Position bezogen auf die Längsrichtung einzunehmen und
- auf eine zu beschreibende Zeile des von der Aufnahmeeinrichtung (10) aufgenommenen Mediums (1) zu bewegt zu werden und dabei die in der zu beschreibenden Zeile angeordneten Stifte (2, 12) des Mediums (1) entsprechend der jeweils eingenommenen Position der Positionierstifte (21) in Längsrichtung zu verschieben,
**gekennzeichnet durch**
einen Gegenkopf (30), welcher dem Schreibkopf (20) gegenüberliegt und in einer Zeile angeordnete, erste Gegenstifte (32) aufweist, welche bezüglich ihrer Anzahl und/oder Anordnung den Positionierstiften (21) des Schreibkopfs (20) im Wesentlichen entsprechen und dazu eingerichtet sind,
- bezogen auf die eingenommenen Positionen der Positionierstifte (21) jeweils komplementäre Positionen einzunehmen und
- an einer beschriebenen Zeile des Mediums (1) positioniert zu werden, nachdem die in der beschriebenen Zeile des Mediums (1) angeordneten Stifte (2, 12) entsprechend der jeweils eingenommenen Position der Positionierstifte (21) in Längsrichtung vorschoben worden sind und/oder während die in einer der beschriebenen Zeile benachbarten und zu beschreibenden Zeile des Mediums (1) angeordneten Stifte (2, 12) entsprechend der jeweils eingenommenen Position der Positionierstifte (21) in Längsrichtung vorschoben werden.

2. Vorrichtung nach Anspruch 1 mit einer Steuerungseinrichtung (40), welche dazu eingerichtet ist, Strukturdaten zu erzeugen und/oder zu empfangen, durch welche die zu erzeugende dreidimensionale Struktur charakterisiert wird und/oder die vorgegebenen Positionen der Positionierstifte (21) vorgegeben werden.

3. Vorrichtung nach einem der vorangehenden Ansprüche, wobei der Schreibkopf (20) dazu eingerichtet ist, die, insbesondere alle, in der Zeile des Schreibkopfs (20) angeordneten Positionierstifte (21) gleichzeitig und/oder gemeinsam auf die zu beschreibende Zeile des Mediums (1) zuzubewegen, um die in der zu beschreibenden Zeile angeordneten Stifte (2, 12) des Mediums (1) entsprechend der jeweils eingenommenen Position der Positionierstifte (21) in Längsrichtung zu verschieben.

4. Vorrichtung nach einem der vorangehenden Ansprüche, wobei der Schreibkopf (20) ein Positionierelement (23) aufweist, welches dazu eingerichtet ist, die, insbesondere alle, in der Zeile des Schreibkopfs (20) angeordneten Positionierstifte (21) gleichzeitig und/oder gemeinsam in Längsrichtung zu bewegen, und den Positionierstiften (21) jeweils ein Halteelement (25) zugeordnet ist, welches dazu eingerichtet ist, eine durch das Positionierelement (23) erzeugte Bewegung des jeweiligen Positionierstifts (21) in Längsrichtung solange zu ermöglichen, bis der Positionierstift (21) die vorgegebene Position bezogen auf die Längsrichtung eingenommen hat, und den Positionierstift (21) in der vorgegebenen Position zu halten, wenn der Positionierstift (21) die vorgegebene Position bezogen auf die Längsrichtung eingenommen hat.

5. Vorrichtung nach einem der vorangehenden Ansprüche, wobei der Gegenkopf (30) ferner in einer weiteren Zeile angeordnete zweite Gegenstifte (31) aufweist, welche den Positionierstiften (21) des Schreibkopfs (20) im Wesentlichen gegenüberliegen und dazu eingerichtet sind, an einer zu beschreibenden Zeile des Mediums (1) positioniert zu werden und die in der zu beschreibenden Zeile des Mediums (1) angeordneten Stifte (2, 12) jeweils mit einer Gegenkraft in Längsrichtung zu beaufschlagen, während die Stifte (2, 12) entsprechend der jeweils eingenommenen Position der Positionierstifte (21) in Längsrichtung verschoben werden.

6. Vorrichtung nach einem der vorangehenden Ansprüche, wobei der Gegenkopf (30) ferner ein oder mehrere in einer oder mehreren weiteren Zeilen angeordnete Ausrichtelemente, insbesondere in Form von Ausrichtstiften (34) und/oder in Form einer Leiste, aufweist, welche dazu eingerichtet sind, die in einer zu beschreibenden Zeile des Mediums (1) angeordneten Stifte (2, 12)
- in eine bezogen auf die Längsrichtung vorgegebene Ausgangsposition zu bringen, wenn die Ausrichtelemente auf das Medium (1) zu bewegt werden, und/oder
- in der Ausgangsposition zu halten, wenn die nächste und/oder eine benachbarte Zeile des Mediums (1) beschrieben wird.

7. Vorrichtung nach Anspruch 6, wobei die Ausrichtelemente in zwei oder mehreren Zeilen, insbesondere in drei Zeilen, angeordnet und so ausgestaltet sind, dass sie die in zwei oder mehreren Zeilen des Mediums (1) angeordneten Stifte (2, 12) unterschiedlich weit in Längsrichtung verschieben, wenn die Ausrichtelemente auf das Medium (1) zu bewegt werden.

8. Vorrichtung nach einem der vorangehenden Ansprüche, wobei die Steuerungseinrichtung (40) dazu eingerichtet ist, die in der Zeile des Gegenkopfs (30) angeordneten ersten Gegenstifte (32) in Abhängigkeit von den Strukturdaten so anzusteuern, dass die ersten Gegenstifte Positionen einnehmen, welche zu den eingenommenen Positionen der Positionierstifte (21) und/oder zu der zu erzeugenden dreidimensionalen Struktur entlang einer jeweils zu beschreibenden Zeile des Mediums (1) komplementär sind.

9. Vorrichtung nach einem der vorangehenden Ansprüche, wobei die ersten Gegenstifte (32) des Gegenkopfs (30) ferner dazu eingerichtet sind,
- jeweils eine vorgegebene Position bezogen auf die Längsrichtung einzunehmen und
- auf eine zu beschreibende Zeile des von der Aufnahmeeinrichtung (10) aufgenommenen Mediums (1) zu bewegt zu werden und dabei die in der zu beschreibenden Zeile angeordneten Stifte (2, 12) des Mediums (1) entsprechend der jeweils eingenommenen Position der ersten Gegenstifte (32) in Längsrichtung zu verschieben.

10. Vorrichtung nach Anspruch 9, wobei die Positionierstifte (21) des Schreibkopfs (20) bezüglich ihrer Anzahl und/oder Anordnung den ersten Gegenstiften (32) des Gegenkopfs (30) im Wesentlichen entsprechen und dazu eingerichtet sind, an einer beschriebenen Zeile des Mediums (1) zu verbleiben,
- nachdem die in der beschriebenen Zeile des Mediums (1) angeordneten Stifte (2, 12) entsprechend der jeweils eingenommenen Position der Positionierstifte (21) des Schreibkopfs (20) in Längsrichtung vorschoben worden sind und
- während die in einer der beschriebenen Zeile benachbarten und zu beschreibenden Zeile des Mediums (1) angeordneten Stifte (2, 12) entsprechend der jeweils eingenommenen Position der ersten Gegenstifte (32) des Gegenkopfs (30) in Längsrichtung vorschoben werden.

11. Vorrichtung nach Anspruch 9 oder 10, wobei der Schreibkopf (20) ferner in einer weiteren Zeile angeordnete Gegenstifte aufweist, welche den ersten Gegenstiften (32) des Gegenkopfs (30) im Wesentlichen gegenüberliegen und dazu eingerichtet sind, an einer zu beschreibenden Zeile des Mediums (1) positioniert zu werden und die in der zu beschreibenden Zeile des Mediums (1) angeordneten Stifte (12) jeweils mit einer Gegenkraft in Längsrichtung zu beaufschlagen, während die Stifte (12) entsprechend der jeweils eingenommenen Position der ersten Gegenstifte (32) des Gegenkopfs (30) in Längsrichtung verschoben werden.

12. Vorrichtung nach einem der Ansprüche 9 bis 11, wobei der Schreibkopf (20) ferner ein oder mehrere in einer oder mehreren weiteren Zeilen angeordnete Ausrichtelemente, insbesondere in Form von Ausrichtstiften und/oder in Form einer Leiste, aufweist, welche dazu eingerichtet sind, die in einer mittels der ersten Gegenstifte (32) des Gegenkopfs (30) zu beschreibenden Zeile des Mediums (1) angeordneten Stifte (2, 12)
- in eine bezogen auf die Längsrichtung vorgegebene Ausgangsposition zu bringen, wenn die Ausrichtelemente des Schreibkopfs auf das Medium (1) zu bewegt werden, und/oder
- in der Ausgangsposition zu halten, wenn die nächste und/oder eine benachbarte Zeile mittels der ersten Gegenstifte (32) des Gegenkopfs (30) beschrieben wird.

13. Vorrichtung nach einem der vorhergehenden Ansprüche mit einer Vorschubeinrichtung (9, 13, 14), welche dazu eingerichtet ist, eine Relativbewegung zwischen dem Schreibkopf (20) und/oder Gegenkopf (30) einerseits und dem Medium (1) andererseits in einer im Wesentlichen senkrecht zur Ausrichtung der Zeilen des Mediums (1) und/oder senkrecht zur Längsrichtung verlaufenden Vorschubrichtung zu erzeugen, um ein zeilenweises Erzeugen der dreidimensionalen Struktur in dem Medium (1) zu ermöglichen.

14. System zur Erzeugung einer dreidimensionalen Struktur in einem Medium (1) mit
- mindestens einem Medium (1), welches eine Vielzahl von in mehreren Zeilen des Mediums (1) parallel zueinander angeordneten Stiften (2, 12) aufweist, welche in Längsrichtung einzeln verschiebbar sind, und
- einer Vorrichtung nach einem der vorangehenden Ansprüche.

15. Verfahren zur Erzeugung einer dreidimensionalen Struktur in einem von einer Aufnahmeeinrichtung (10) aufgenommenen Medium (1), welches eine Vielzahl von in mehreren Zeilen parallel zueinander angeordneten und in Längsrichtung einzeln verschiebbaren Stiften (2, 12) aufweist, wobei mehrere in einer Zeile angeordnete, einzeln ansteuerbare Positionierstifte (21) eines Schreibkopfs (20)
- in jeweils eine vorgegebene Position bezogen auf die Längsrichtung gebracht werden und
- auf eine zu beschreibende Zeile des Mediums (1) zu bewegt werden und dabei die in der zu beschreibenden Zeile angeordneten Stifte (2, 12) des Mediums (1) entsprechend der jeweils eingenommenen Position der Positionierstifte in Längsrichtung verschieben,
**dadurch gekennzeichnet, dass**
in einer Zeile angeordnete erste Gegenstifte (32) eines Gegenkopfs (30), welcher dem Schreibkopf (20) gegenüberliegt, bezüglich ihrer Anzahl und/oder Anordnung den Positionierstiften (21) des Schreibkopfs (20) im Wesentlichen entsprechen und,
- bezogen auf die eingenommenen Positionen der Positionierstifte (21) jeweils komplementäre Positionen einnehmen und
- an einer beschriebenen Zeile des Mediums (1) positioniert werden, nachdem die in der beschriebenen Zeile des Mediums (1) angeordneten Stifte (2, 12) entsprechend der jeweils eingenommenen Position der Positionierstifte (21) in Längsrichtung vorschoben worden sind und/oder während die in einer der beschriebenen Zeile benachbarten und zu beschreibenden Zeile des Mediums (1) angeordneten Stifte (2, 12) entsprechend der jeweils eingenommenen Position der Positionierstifte (21) in Längsrichtung vorschoben werden.

## Claims

1. Apparatus for generating a three-dimensional structure in a medium (1), comprising
- a holding device (10) configured to hold a medium (1) comprising a plurality of pins (2, 12) which are arranged in multiple lines parallel to one another and which are individually shiftable in a longitudinal direction, and
- at least one write head (20) comprising a plurality of individually controllable positioning pins (21), which are arranged in a line and which are configured to
- assume a predetermined position relative to the longitudinal direction and
- to be shifted to a line to be written on of the medium (1) held by the holding device (10) and thereby to displace the pins (2, 12) of the medium (1) arranged in the line to be written on in the longitudinal direction in accordance with the respective position assumed by the positioning pins (21),
**characterized by**
a counterhead (30) which is opposite the write head (20) and has first counterpins (32) which are arranged in a line and, in terms of their number and/or arrangement, substantially correspond to the positioning pins (21) of the write head (20) and are configured
- to assume positions complementary to the respective positions occupied by the positioning pins (21), and
- to be positioned on a written line of the medium (1) after the pins (2, 12) arranged in the written line of the medium (1) have been shifted in the longitudinal direction corresponding to the respective positions assumed by the positioning pins (21) and/or while the pins, which are arranged in a line of the medium (1) to be written on adjacent to the written line , are shifted in the longitudinal direction in accordance with the respective positions of the positioning pins (21).

2. Apparatus according to claim 1, comprising a control device (40) configured to generate and/or receive structural data by which the three-dimensional structure to be generated is characterized and/or the predetermined positions of the positioning pins (21) are specified.

3. Apparatus according to one of the preceding claims, wherein the write head (20) is configured to shift the, in particular all, positioning pins (21) arranged in the line of the write head (20) simultaneously and/or collectively toward the line of the medium (1) to be written on, in order to shift the pins (2, 12) of the medium (1) arranged in the line to be written on in the longitudinal direction in accordance with the respective positions occupied by the positioning pins (21).

4. Apparatus according to one of the preceding claims, wherein the write head (20) comprises a positioning element (23) configured to shift the, in particular all, positioning pins (21) arranged in the line of the write head (20) simultaneously and/or collectively in the longitudinal direction, and each positioning pin (21) is associated with a holding element (25) which is configured to allow a shift of the respective positioning pin (21) in the longitudinal direction generated by the positioning element (23) until the positioning pin (21) has assumed the predetermined position relative to the longitudinal direction, and to hold the positioning pin (21) in the predetermined position once the positioning pin (21) has assumed the predetermined position relative to the longitudinal direction.

5. Apparatus according to one of the preceding claims, wherein the counterhead (30) further comprises second counterpins (31), which are arranged in a further line and are substantially opposite the positioning pins (21) of the write head (20) and are adapted to be positioned at a line of the medium (1) to be written on and to apply a counterforce in the longitudinal direction to each of the pins (2, 12) arranged in the line of the medium (1) to be written on, while the pins (2, 12) are shifted in the longitudinal direction corresponding to the respective position assumed by the positioning pins (21).

6. Apparatus according to one of the preceding claims, wherein the counterhead (30) further comprises one or more alignment elements arranged in one or more additional lines, in particular in the form of alignment pins (34) and/or in the form of a strip, which are configured
- to bring the pins arranged in a line of the medium (1) to be written on (2, 12) into a predetermined starting position relative to the longitudinal direction when the alignment elements are moved toward the medium (1),
and/or
- to hold the pins arranged in a line of the medium (1) to be written on (2, 12) in the starting position when the next and/or an adjacent line of the medium (1) is being written on.

7. Apparatus according to claim 6, wherein the alignment elements are arranged in two or more lines, in particular in three lines, and are configured such that they shift the pins (2, 12) arranged in two or more lines of the medium (1) by different distances in the longitudinal direction when the alignment elements are moved toward the medium (1).

8. Apparatus according to one of the preceding claims, wherein the control device (40) is configured to control the first counterpins (32) arranged in the line of the counterhead (30) in dependence on the structural data such that the first counterpins assume positions that are complementary to the assumed positions of the positioning pins (21) and/or to the three-dimensional structure to be generated along a respective line of the medium (1) to be written on.

9. Apparatus according to one of the preceding claims, wherein the first counterpins (32) of the counterhead (30) are further configured to
- assume a predetermined position relative to the longitudinal direction in each case, and
- be moved toward a line to be written on of the medium (1) held by the holding device (10) and, in doing so, to shift the pins (2, 12) of the medium (1) arranged in the line to be written on in the longitudinal direction in accordance with the respective position assumed by the first counterpins (32).

10. Apparatus according to claim 9, wherein the positioning pins (21) of the write head (20) substantially correspond to the first counterpins (32) of the counterhead (30) in terms of their number and/or arrangement and are configured to remain on a written line of the medium (1),
- after the pins (2, 12) arranged in the written line of the medium (1) have been shifted in the longitudinal direction in accordance with the respective positions occupied by the positioning pins (21) of the write head (20), and
- while the pins (2, 12) arranged in a line of the medium (1) adjacent to and to be written on are shifted in the longitudinal direction in accordance with the respective position of the first counterpins (32) of the counterhead (30).

11. Apparatus according to claim 9 or 10, wherein the write head (20) further comprises counterpins, which are arranged in a further line and are substantially opposite the first counterpins (32) of the counterhead (30) and are adapted to be positioned at a line of the medium (1) to be written on and to apply a counterforce in the longitudinal direction to each of the pins (12) arranged in the line of the medium (1) to be written on, while the pins (12) are shifted in the longitudinal direction corresponding to the respective position assumed by the first counterpins (32) of the counterhead (30).

12. Apparatus according to any one of claims 9 to 11, wherein the write head (20) further comprises one or more alignment elements, in particular in the form of alignment pins and/or in the form of a bar, arranged in one or more further lines wherein the alignment elements are configured
- to bring the pins (2, 12), which are arranged in a line of the medium (1) to be written on by means of the first counterpins (32) of the counterhead (30), into a predetermined starting position relative to the longitudinal direction when the alignment elements of the write head are moved toward the medium (1), and/or
- to hold the pins (2, 12), which are arranged in a line of the medium (1) to be written on by means of the first counterpins (32) of the counterhead (30), in the starting position when the next and/or an adjacent line is written by means of the first counterpins (32) of the counterhead (30).

13. Apparatus according to one of the preceding claims, comprising a feed mechanism (9, 13, 14) configured to generate a relative movement between the write head (20) and/or counterhead (30) on the one hand and the medium (1) on the other hand in a feed direction extending substantially perpendicular to the orientation of the lines of the medium (1) and/or perpendicular to the longitudinal direction, in order to enable the three-dimensional structure to be created line by line in the medium (1).

14. System for generating a three-dimensional structure in a medium (1), comprising
- at least one medium (1) comprising a plurality of pins (2, 12) arranged in parallel with one another in several lines of the medium (1), which pins are individually shiftable in the longitudinal direction, and
- an apparatus according to one of the preceding claims.

15. Method for generating a three-dimensional structure in a medium (1) held by a holding device (10), the medium (1) comprising a plurality of pins (2, 12), which are arranged in parallel to one another in multiple lines and individually shiftable in a longitudinal direction, wherein multiple individually controllable positioning pins (21) of a write head (20) arranged in a line
- are each brought into a predetermined position relative to the longitudinal direction and
- are moved toward a line of the medium (1) to be written on, thereby shifting the pins (2, 12) of the medium (1) arranged in the line to be written on in the longitudinal direction in accordance with the respective positions assumed by the positioning pins,
**characterized in that**
first counterpins (32) of a counterhead (30), which is arranged opposite the write head (20), correspond substantially to the positioning pins (21) of the write head (20) in terms of their number and/or arrangement, and
- assume positions complementary to the respective positions assumed by the positioning pins (21) and
- are positioned on a written line of the medium (1) after the pins arranged in the written line of the medium (1) (2, 12) have been shifted in the longitudinal direction corresponding to the respective positions assumed by the positioning pins (21) and/or while the pins (2, 12), which are arranged in a line of the medium (1) to be written on adjacent to the written line, are shifted in the longitudinal direction in accordance with the respective positions of the positioning pins (21).

## Revendications

1. Dispositif de production d'une structure tridimensionnelle dans un support (1) avec
- un appareil de réception (10), qui est configuré pour recevoir un support (1) qui présente une pluralité de broches (2, 12) disposées parallèlement les une aux autres en plusieurs lignes, qui peuvent être déplacées individuellement dans la direction longitudinale, et
- au moins une tête d'écriture (20), qui présente plusieurs broches de positionnement (21) disposées en une ligne, pouvant être commandées individuellement, qui sont configurées pour
- occuper respectivement une position prédéfinie par rapport à la direction longitudinale et
- être mises en mouvement vers une ligne à écrire du support (1) reçu par l'appareil de réception (10) et déplacer ce faisant les broches (2, 12) du support (1) disposées en la ligne à écrire dans la direction longitudinale conformément à la position respectivement occupée des broches de positionnement (21),
**caractérisé par**
une contre-tête (30), qui est opposée à la tête d'écriture (20) et présente des premières contre-broches (32) disposées en une ligne, qui correspondent sensiblement aux broches de positionnement (21) de la tête d'écriture (20) en ce qui concerne leur nombre et/ou disposition et sont configurées pour
- occuper des positions respectivement complémentaires par rapport aux positions occupées des broches de positionnement (21) et
- être positionnées sur une ligne écrite du support (1) après que les broches (2, 12) disposées en la ligne écrite du support (1) ont été avancées dans la direction longitudinale conformément à la position respectivement occupée des broches de positionnement (21) et/ou tandis que les broches (2, 12) disposées en une ligne du support (1) adjacente à la ligne écrite et à écrire sont avancées dans la direction longitudinale conformément à la position respectivement occupée des broches de positionnement (21).

2. Dispositif selon la revendication 1 avec un appareil de commande (40), qui est configuré pour produire et/ou pour recevoir des données de structure par lesquelles la structure tridimensionnelle à produire est caractérisée et/ou les positions prédéfinies des broches de positionnement (21) sont prédéfinies.

3. Dispositif selon l'une quelconque des revendications précédentes, dans lequel la tête d'écriture (20) est configurée pour mettre en mouvement simultanément et/ou conjointement les, en particulier toutes les broches de positionnement (21) disposées en la ligne de la tête d'écriture (20) vers la ligne à écrire du support (1), afin de déplacer les broches (2, 12) du support (1) disposées en la ligne à écrire dans la direction longitudinale conformément à la position respectivement occupée des broches de positionnement (21).

4. Dispositif selon l'une quelconque des revendications précédentes, dans lequel la tête d'écriture (20) présente un élément de positionnement (23) qui est configuré pour mettre en mouvement simultanément et/ou conjointement les, en particulier toutes les broches de positionnement (21) disposées en la ligne de la tête d'écriture (20) dans la direction longitudinale, et qu'un élément de maintien (25), qui est configuré pour permettre un mouvement de la broche de positionnement (21) respective produit par l'élément de positionnement (23) dans la direction longitudinale jusqu'à ce que la broche de positionnement (21) ait occupé la position prédéfinie par rapport à la direction longitudinale, et pour maintenir la broche de positionnement (21) dans la position prédéfinie lorsque la broche de positionnement (21) a occupé la position prédéfinie par rapport à la direction longitudinale, est affecté respectivement aux broches de positionnement (21).

5. Dispositif selon l'une quelconque des revendications précédentes, dans lequel la contre-tête (30) présente en outre des secondes contre-broches (31) disposées en une autre ligne, qui sont sensiblement opposées aux broches de positionnement (21) de la tête d'écriture (20) et configurées pour être positionnées sur une ligne à écrire du support (1) et pour solliciter les broches (2, 12) disposées en la ligne à écrire du support (1) respectivement avec une contre-force dans la direction longitudinale, tandis que les broches (2, 12) sont déplacées dans la direction longitudinale conformément à la position respectivement occupée des broches de positionnement (21).

6. Dispositif selon l'une quelconque des revendications précédentes, dans lequel la contre-tête (30) présente en outre un ou plusieurs éléments d'alignement disposés en une ou plusieurs autres lignes, en particulier sous forme de broches d'alignement (34) et/ou sous forme d'une barrette, qui sont configurés pour amener les broches (2, 12) disposées en une ligne à écrire du support (1)
- dans une position de départ prédéfinie par rapport à la direction longitudinale lorsque les éléments d'alignement sont mis en mouvement vers le support (1), et/ou
- pour les maintenir dans la position de départ lorsque la ligne suivante et/ou une ligne adjacente du support (1) est écrite.

7. Dispositif selon la revendication 6, dans lequel les éléments d'alignement sont disposés en deux lignes ou plus, en particulier en trois lignes, et sont conçus de sorte qu'ils déplacent les broches (2, 12) disposées en deux lignes ou plus du support (1) plus ou moins loin dans la direction longitudinale lorsque les éléments d'alignement sont mis en mouvement vers le support (1).

8. Dispositif selon l'une quelconque des revendications précédentes, dans lequel l'appareil de commande (40) est configuré pour commander les premières contre-broches (32) disposées en la ligne de la contre-tête (30) en fonction des données de structure, de sorte que les premières contre-broches occupent des positions qui sont complémentaires aux positions occupées des broches de positionnement (21) et/ou à la structure tridimensionnelle à produire le long d'une ligne respectivement à écrire du support (1).

9. Dispositif selon l'une quelconque des revendications précédentes, dans lequel les premières contre-broches (32) de la contre-tête (30) sont en outre configurées pour
- occuper respectivement une position prédéfinie par rapport à la direction longitudinale et
- être mises en mouvement vers une ligne à écrire du support (1) reçu par l'appareil de réception (10) et déplacer ce faisant les broches (2, 12) du support (1) disposées en la ligne à écrire dans la direction longitudinale conformément à la position respectivement occupée des premières contre-broches (32).

10. Dispositif selon la revendication 9, dans lequel les broches de positionnement (21) de la tête d'écriture (20) correspondent sensiblement aux premières contre-broches (32) de la contre-tête (30) en ce qui concerne leur nombre et/ou disposition et sont configurées pour rester sur une ligne écrite du support (1),
- après que les broches (2, 12) disposées en la ligne écrite du support (1) ont été avancées dans la direction longitudinale conformément à la position respectivement occupée des broches de positionnement (21) de la tête d'écriture (20) et
- tandis que les broches (2, 12) disposées en une ligne adjacente à la ligne écrite et à écrire du support (1) sont avancées dans la direction longitudinale conformément à la position respectivement occupée des premières contre-broches (32) de la contre-tête (30).

11. Dispositif selon la revendication 9 ou 10, dans lequel la tête d'écriture (20) présente en outre des contre-broches disposées en une autre ligne, qui sont sensiblement opposées aux premières contre-broches (32) de la contre-tête (30) et sont configurées pour être positionnées sur une ligne à écrire du support (1) et pour solliciter les broches (12) disposées en la ligne à écrire du support (1) respectivement avec une contre-force dans la direction longitudinale, tandis que les broches (12) sont déplacées dans la direction longitudinale conformément à la position respectivement occupée des premières contre-broches (32) de la contre-tête (30).

12. Dispositif selon l'une quelconque des revendications 9 à 11, dans lequel la tête d'écriture (20) présente en outre un ou plusieurs éléments d'alignement disposés en une ou plusieurs autres lignes, en particulier sous forme de broches d'alignement et/ou sous forme de barrette, qui sont configurés pour amener les broches (2, 12) disposées en une ligne à écrire du support (1) au moyen des premières contre-broches (32) de la contre-tête (30)
- dans une position de départ prédéfinie par rapport à la direction longitudinale lorsque les éléments d'alignement de la tête d'écriture sont mis en mouvement vers le support (1), et/ou
- pour les maintenir dans la position de départ lorsque la ligne suivante et/ou une ligne adjacente est écrite au moyen des premières contre-broches (32) de la contre-tête (30).

13. Dispositif selon l'une quelconque des revendications précédentes avec un appareil d'avance (9, 13, 14) qui est configuré pour produire un mouvement relatif entre la tête d'écriture (20) et/ou la contre-tête (30) d'une part et le support (1) d'autre part dans une direction d'avance s'étendant sensiblement perpendiculairement à l'orientation des lignes du support (1) et/ou perpendiculairement à la direction longitudinale, afin de permettre une production ligne par ligne de la structure tridimensionnelle dans le support (1).

14. Système de production d'une structure tridimensionnelle dans un support (1) avec
- au moins un support (1), qui présente une pluralité de broches (2, 12) disposées parallèlement les unes aux autres en plusieurs lignes du support (1), qui peuvent être déplacées individuellement dans la direction longitudinale, et
- un dispositif selon l'une quelconque des revendications précédentes.

15. Procédé de production d'une structure tridimensionnelle dans un support (1) reçu par un appareil de réception (10), qui présente une pluralité de broches (2, 12) disposées parallèlement les unes aux autres en plusieurs lignes et pouvant être déplacées individuellement dans la direction longitudinale, dans lequel plusieurs broches de positionnement (21) d'une tête d'écriture (20) disposées en une ligne et pouvant être commandées individuellement
- sont amenées dans une position prédéfinie par rapport à la direction longitudinale et
- sont mises en mouvement vers une ligne à écrire du support (1) et déplacent ce faisant les broches (2, 12) du support (1) disposées en la ligne à écrire dans la direction longitudinale conformément à la position respectivement occupée des broches de positionnement,
**caractérisé en ce que**
des premières contre-broches (32) disposées en une ligne d'une contre-tête (30), qui est opposée à la tête d'écriture (20), correspondent sensiblement aux broches de positionnement (21) de la tête d'écriture (20) en ce qui concerne leur nombre et/ou disposition et,
- occupent des positions respectivement complémentaires par rapport aux positions occupées des broches de positionnement (21) et
- sont positionnées sur une ligne écrite du support (1) après que les broches (2, 12) disposées en la ligne écrite du support (1) ont été avancées dans la direction longitudinale conformément à la position respectivement occupée des broches de positionnement (21) et/ou tandis que les broches (2, 12) disposées en une ligne adjacente à la ligne écrite et à écrire du support (1) sont avancées dans la direction longitudinale conformément à la position respectivement occupée des broches de positionnement (21).
